(19) Europäisches Patentamt
European Patent Office
Office européen des brevets

(11) **EP 4 518 479 A1**

(12) **EUROPEAN PATENT APPLICATION**
published in accordance with Art. 153(4) EPC

(43) Date of publication:
**05.03.2025  Bulletin 2025/10**

(21) Application number: **22939385.5**

(22) Date of filing: **29.04.2022**

(51) International Patent Classification (IPC):
**H04W 72/04** (2023.01)    **H04W 56/00** (2009.01)

(52) Cooperative Patent Classification (CPC):
**H04W 56/00; H04W 72/04**

(86) International application number:
**PCT/CN2022/090682**

(87) International publication number:
**WO 2023/206539 (02.11.2023 Gazette 2023/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Beijing Xiaomi Mobile Software Co., Ltd.**
**Beijing 100085 (CN)**

(72) Inventors:
• **ZHANG, Zhenyu**
  **Beijing (CN)**
• **GAO, Xueyuan**
  **Beijing (CN)**

(74) Representative: **Hersina, Günter et al**
**Schoppe, Zimmermann, Stöckeler**
**Zinkler, Schenk & Partner mbB**
**Patentanwälte**
**Radlkoferstrasse 2**
**81373 München (DE)**

(54) **MULTIPLE TRANSMISSION RECEPTION POINT-BASED COMMUNICATION METHOD AND APPARATUS, DEVICE, AND STORAGE MEDIUM**

(57)    The present application relates to a multiple transmission reception point-based communication method and apparatus, a device and a storage medium. The method comprises: determining indication information, the indication information being used for indicating timing advance information of at least two transmission reception points (TRPs) (S11); and sending the indication information to a terminal (S12). In the present application, the corresponding timing advance information is determined for different TRPs, so that uplink time and a downlink times for different TRPs are closer, thereby relieving ISI situation and improving system communication performance.

determining indication information, the indication information being used to indicate TA information about at least two TRPs — S11

sending the indication information to a UE — S12

FIG. 8

**Description**

## TECHNICAL FIELD

The present disclosure relates to the field of communication technology, in particular to a communication method based on Multiple Transmission Reception Points (M-TRPs), an apparatus, a device and a storage medium.

## BACKGROUND

Along with the development of the communication technology, a communication system has evolved into a Multiple Input Multiple Output (MIMO) M-TRP system. In the MIMO M-TRP, a network device (e.g., base station) uses a plurality of TRPs to provide services for a User Equipment (UE).

In the MIMO M-TRP system, the plurality of TRPs uses a Timing Advance (TA) to perform transmission, i.e., TA adjustment is performed based on one TRP. However, in the M-TRP system, with respect to inter-cell or intra-cell communication, usually different TRPs are located in different geographic regions, and the UE is spaced apart from the TRPs by different distances, so different transmission delays occur. Hence, through performing the TA adjustment based on one TRP, it is able to achieve the synchronization between an uplink time and a downlink time at the TRP based on which the TA adjustment is performed, but it is impossible to achieve the synchronization between the uplink time and the downlink time at the other TRPs. At this time, an Inter-Symbol Interference (ISI) is caused for the uplink and the downlink, and thereby a loss of the system performance occurs.

## SUMMARY

In order to overcome the problems existing in the related art, the present disclosure provides in some embodiments a communication method based on M-TRPs, an apparatus, a device, and a storage medium.

In a first aspect, the present disclosure provides in some embodiments a communication method based on M-TRPs, performed by a network device, including: determining indication information, wherein the indication information is used to indicate TA information about at least two TRPs; and sending the indication information to a User Equipment (UE). In the embodiments of the present disclosure, corresponding TA information is determined for different TRPs, so as to enable an uplink time and a downlink time for different TRPs to be closer to each other, thereby to relieve an ISI, and improve system communication performance.

In a possible embodiment of the present disclosure, the indication information is used to indicate at least two TA information, and the at least two TA information correspond to the at least two TRPs respectively.

In a possible embodiment of the present disclosure, the indication information includes first indication information and second indication information, the first indication information is used to indicate initial TA information, and the second indication information is used to indicate updated TA information.

In a possible embodiment of the present disclosure, the first indication information is used to indicate single initial TA information, the second indication information is used to indicate at least two updated TA information, and the at least two updated TA information correspond to the at least two TRPs respectively.

In a possible embodiment of the present disclosure, the first indication information is used to indicate at least two initial TA information, and the second indication information is used to indicate at least two updated TA information; the at least two initial TA information correspond to the at least two TRPs respectively; and the at least two updated TA information correspond to the at least two TRPs respectively.

In a possible embodiment of the present disclosure, the first indication information includes at least two first Timing Advance Command (TAC) indication fields, and the at least two first TAC indication fields correspond to the at least two initial TA information respectively.

In a possible embodiment of the present disclosure, the second indication information includes a single second TAC indication field, and the single second TAC indication field is used to indicate the at least two updated TA information.

In a possible embodiment of the present disclosure, the second indication information includes at least two second TAC indication fields, and the at least two second TAC indication fields correspond to the at least two updated TA information respectively.

In a possible embodiment of the present disclosure, the second indication information includes a second TAC indication field and a TA offset indication field, the second TAC indication field is used to indicate the TA information, and the TA offset indication field is used to indicate offset information about a TA.

In a possible embodiment of the present disclosure, the offset information about the TA includes relative offset information or absolute offset information, the relative offset information is an offset relative to the TA information indicated in the second TAC indication field, the absolute offset information is determined based on a quantization gradient, and the quantization gradient is determined based on the TA information indicated in the second TAC indication field.

In a possible embodiment of the present disclosure, the indication information is used to indicate a single TA information.

In a possible embodiment of the present disclosure, the single TA information includes one of: TA information about a TRP selected from the at least two TRPs based on a predetermined rule; TA information having a largest value in the at least two TA information about the at least two TRPs; TA information having a smallest value in the at least two TA information about the at least two TRPs; or TA information obtained by subjecting values corresponding to the TA information about the at least two TRPs to a mean processing.

In a possible embodiment of the present disclosure, the TA information includes at least one of a TA or a timing reference time.

In a possible embodiment of the present disclosure, the first indication information is a random access response, and the second indication information is a Medium Access Control Control Element (MAC-CE).

In a second aspect, the present disclosure provides in some embodiments a communication method based on M-TRPs, performed by a UE, including: determining indication information, wherein the indication information is used to indicate TA information about at least two TRPs; receiving the indication information; and sending uplink data to the at least two TRPs based on the indication information. In the embodiments of the present disclosure, corresponding TA information is determined for different TRPs, so as to enable an uplink time and a downlink time for different TRPs to be closer to each other, thereby to relieve an ISI, and improve system communication performance.

In a possible embodiment of the present disclosure, the indication information is used to indicate at least two TA information, and the at least two TA information correspond to the at least two TRPs respectively.

In a possible embodiment of the present disclosure, the indication information includes first indication information and second indication information, the first indication information is used to indicate initial TA information, and the second indication information is used to indicate updated TA information.

In a possible embodiment of the present disclosure, the first indication information is used to indicate single initial TA information, and the second indication information is used to indicate at least two updated TA information; and the at least two updated TA information correspond to the at least two TRPs respectively.

In a possible embodiment of the present disclosure, the first indication information is used to indicate at least two initial TA information, and the second indication information is used to indicate at least two updated TA information; the at least two initial TA information correspond to the at least two TRPs respectively; and the at least two updated TA information correspond to the at least two TRPs respectively.

In a possible embodiment of the present disclosure, the first indication information includes at least two first TAC indication fields, and the at least two first TAC indication fields correspond to the at least two initial TA information respectively.

In a possible embodiment of the present disclosure, the second indication information includes a single second TAC indication field, and the single second TAC indication field is used to indicate the at least two updated TA information.

In a possible embodiment of the present disclosure, the second indication information includes at least two second TAC indication fields, and the at least two second TAC indication fields correspond to the at least two updated TA information respectively.

In a possible embodiment of the present disclosure, the second indication information includes a second TAC indication field and a TA offset indication field, the second TAC indication field is used to indicate the TA information, and the TA offset indication field is used to indicate offset information about a TA.

In a possible embodiment of the present disclosure, the offset information about the TA includes relative offset information or absolute offset information, the relative offset information is an offset relative to the TA information indicated in the second TAC indication field, the absolute offset information is determined based on a quantization gradient, and the quantization gradient is determined based on the TA information indicated in the second TAC indication field.

In a possible embodiment of the present disclosure, the indication information is used to indicate a single TA information.

In a possible embodiment of the present disclosure, the single TA information includes one of: TA information about a TRP selected from the at least two TRPs based on a predetermined rule; TA information having a largest value in the at least two TA information about the at least two TRPs; TA information having a smallest value in the at least two TA information about the at least two TRPs; or TA information obtained by subjecting values corresponding to the TA information about the at least two TRPs to a mean processing.

In a possible embodiment of the present disclosure, the TA information includes at least one of a TA or a timing reference time.

In a possible embodiment of the present disclosure, the first indication information is a random access response, and the second indication information is a MAC-CE.

In a third aspect, the present disclosure provides in some embodiments a communication apparatus based on M-TRPs, the communication apparatus being a network device and including: a determination module configured to determine indication information, the indication information being used to indicate TA information about at least two TRPs; and a sending module configured to send the indication information to a UE. In the embodiments of the present disclosure, corresponding TA information is determined for different TRPs, so as to enable an uplink time and a downlink time for different TRPs to be closer to each other, thereby to relieve an ISI, and improve system communication performance.

In a possible embodiment of the present disclosure, the indication information is used to indicate at least two TA information, and the at least two TA information correspond to the at least two TRPs respectively.

In a possible embodiment of the present disclosure, the indication information includes first indication information and second indication information, the first indication information is used to indicate initial TA information, and the second indication information is used to indicate updated TA information.

In a possible embodiment of the present disclosure, the first indication information is used to indicate single initial TA information, the second indication information is used to indicate at least two updated TA information, and the at least two updated TA information correspond to the at least two TRPs respectively.

In a possible embodiment of the present disclosure, the first indication information is used to indicate at least two initial TA information, and the second indication information is used to indicate at least two updated TA information; the at least two initial TA information correspond to the at least two TRPs respectively; and the at least two updated TA information correspond to the at least two TRPs respectively.

In a possible embodiment of the present disclosure, the first indication information includes at least two first TAC indication fields, and the at least two first TAC indication fields correspond to the at least two initial TA information respectively.

In a possible embodiment of the present disclosure, the second indication information includes a single second TAC indication field, and the single second TAC indication field is used to indicate the at least two updated TA information.

In a possible embodiment of the present disclosure, the second indication information includes at least two second TAC indication fields, and the at least two second TAC indication fields correspond to the at least two updated TA information respectively.

In a possible embodiment of the present disclosure, the second indication information includes a second TAC indication field and a TA offset indication field, the second TAC indication field is used to indicate the TA information, and the TA offset indication field is used to indicate offset information about a TA.

In a possible embodiment of the present disclosure, the offset information about the TA includes relative offset information or absolute offset information, the relative offset information is an offset relative to the TA information indicated in the second TAC indication field, the absolute offset information is determined based on a quantization gradient, and the quantization gradient is determined based on the TA information indicated in the second TAC indication field.

In a possible embodiment of the present disclosure, the indication information is used to indicate a single TA information.

In a possible embodiment of the present disclosure, the single TA information includes one of: TA information about a TRP selected from the at least two TRPs based on a predetermined rule; TA information having a largest value in the at least two TA information about the at least two TRPs; TA information having a smallest value in the at least two TA information about the at least two TRPs; or TA information obtained by subjecting values corresponding to the TA information about the at least two TRPs to a mean processing.

In a possible embodiment of the present disclosure, the TA information includes at least one of a TA or a timing reference time.

In a possible embodiment of the present disclosure, the first indication information is a random access response, and the second indication information is a MAC-CE.

In a fourth aspect, the present disclosure provides in some embodiments a communication apparatus based on M-TRPs, the communication apparatus being a UE and including: a determination module configured to determine indication information, the indication information being used to indicate TA information about at least two TRPs; a reception module configured to receive the indication information; and a sending module configured to send uplink data to the at least two TRPs based on the indication information. In the embodiments of the present disclosure, corresponding TA information is determined for different TRPs, so as to enable an uplink time and a downlink time for different TRPs to be closer to each other, thereby to relieve an ISI, and improve system communication performance.

In a possible embodiment of the present disclosure, the indication information is used to indicate at least two TA information, and the at least two TA information correspond to the at least two TRPs respectively.

In a possible embodiment of the present disclosure, the indication information includes first indication information and second indication information, the first indication information is used to indicate initial TA information, and the second indication information is used to indicate updated TA information.

In a possible embodiment of the present disclosure, the first indication information is used to indicate single initial TA information, and the second indication information is used to indicate at least two updated TA information; and the at least two updated TA information correspond to the at least two TRPs respectively.

In a possible embodiment of the present disclosure, the first indication information is used to indicate at least two initial TA information, and the second indication information is used to indicate at least two updated TA information; the at least two initial TA information correspond to the at least two TRPs respectively; and the at least two updated TA information correspond to the at least two TRPs respectively.

In a possible embodiment of the present disclosure, the first indication information includes at least two first TAC indication fields, and the at least two first TAC indication fields correspond to the at least two initial TA information respectively.

In a possible embodiment of the present disclosure, the second indication information includes a single second TAC indication field, and the single second TAC indication field is used to indicate the at least two updated TA information.

In a possible embodiment of the present disclosure, the second indication information includes at least two second TAC indication fields, and the at least two second TAC indication fields correspond to the at least two updated TA information respectively.

In a possible embodiment of the present disclosure, the second indication information includes a second TAC indication field and a TA offset indication field, the second TAC indication field is used to indicate the TA information, and the TA offset indication field is used to indicate offset information about a TA.

In a possible embodiment of the present disclosure, the offset information about the TA includes relative offset information or absolute offset information, the relative offset information is an offset relative to the TA information indicated in the second TAC indication field, the absolute offset information is determined based on a quantization gradient, and the quantization gradient is determined based on the TA information indicated in the second TAC indication field.

In a possible embodiment of the present disclosure, the indication information is used to indicate a single TA information.

In a possible embodiment of the present disclosure, the single TA information includes one of: TA information about a TRP selected from the at least two TRPs based on a predetermined rule; TA information having a largest value in the at least two TA information about the at least two TRPs; TA information having a smallest value in the at least two TA information about the at least two TRPs; or TA information obtained by subjecting values corresponding to the TA information about the at least two TRPs to a mean processing.

In a possible embodiment of the present disclosure, the TA information includes at least one of a TA or a timing reference time.

In a possible embodiment of the present disclosure, the first indication information is a random access response, and the second indication information is a MAC-CE.

In a fifth aspect, the present disclosure provides in some embodiments a communication apparatus based on M-TRPs, including: a processor; and a memory storing therein instructions executable by the processor. The processor is configured to implement the communication method in the first aspect or in any embodiment of the first aspect.

In a sixth aspect, the present disclosure provides in some embodiments a communication apparatus based on M-TRPs, including: a processor; and a memory storing therein instructions executable by the processor. The processor is configured to implement the communication method in the second aspect or in any embodiment of the second aspect.

In a seventh aspect, the present disclosure provides in some embodiments a non-transitory computer-readable storage medium storing therein instructions. When the instructions are executed by a processor of a network device the communication method in the first aspect or in any embodiment of the first aspect is implemented.

In an eighth aspect, the present disclosure provides in some embodiments a non-transitory computer-readable storage medium storing therein instructions. When the instructions are executed by a processor of a network device the communication method in the second aspect or in any embodiment of the second aspect is implemented.

The technical solutions in the embodiments of the present disclosure has the following beneficial effects. The corresponding TA information is determined for different TRPs, so as to enable an uplink time and a downlink time for different TRPs to be closer to each other, thereby to relieve an ISI caused by misalignment of uplink and downlink signals.

It should be appreciated that, the above-mentioned general description and the following detailed description are for illustrative and explanatory purposes, but shall not be used to limit the embodiments of the present disclosure.

## BRIEF DESCRIPTION OF THE DRAWINGS

The drawings herein are incorporated into, and constitute a part of, the specification, show the embodiments of the present disclosure, and are used to explain a principle of the embodiments of the present disclosure together with the specification.

FIG. 1 is a schematic view showing a wireless communication system according to an embodiment of the present disclosure;

FIG. 2 is a schematic view showing the transmission and reception of an uplink signal and a downlink signal for a TRP according to an embodiment of the present disclosure;

FIG. 3 is another schematic view showing the transmission and reception of the uplink signal and the downlink signal for the TRP according to an embodiment of the present disclosure;

FIG. 4 is yet another schematic view showing the transmission and reception of the uplink signal and the downlink signal for the TRP according to an embodiment of the present disclosure;

FIG. 5 is still yet another schematic view showing the transmission and reception of the uplink signal and the downlink signal for the TRP according to an embodiment of the present disclosure;

FIG. 6 is a schematic view showing a structure of Random Access Response (RAR) TAC signaling according to an embodiment of the present disclosure;

FIG. 7 is a schematic view showing a structure of MAC-CE TAC signaling according to an embodiment of the present disclosure;

FIG. 8 is a flow chart of a communication method based on M-TRPs according to an embodiment of the present disclosure;

FIG. 9 is another flow chart of the communication method based on M-TRPs according to an embodiment of the present disclosure;

FIG. 10 is yet another flow chart of the communication method based on M-TRPs according to an embodiment of the present disclosure;

FIG. 11 is still yet flow chart of the communication method based on M-TRPs according to an embodiment of the present disclosure;

FIG. 12 is another schematic view showing the structure of the RAR TAC signaling according to an embodiment of the present disclosure;

FIG. 13 is yet another schematic view showing the structure of the RAR TAC signaling according to an embodiment of the present disclosure;

FIG. 14 is another schematic view showing the structure of the MAC-CE TAC signaling according to an embodiment of the present disclosure;

FIG. 15 is yet another schematic view showing the structure of the MAC-CE TAC signaling according to an embodiment of the present disclosure;

FIG. 16 is still yet another schematic view showing the structure of the MAC-CE TAC signaling according to an embodiment of the present disclosure;

FIG. 17 is still yet another schematic view showing the structure of the MAC-CE TAC signaling according to an embodiment of the present disclosure;

FIG. 18 is still yet another schematic view showing the structure of the MAC-CE TAC signaling according to an embodiment of the present disclosure;

FIG. 19 is still yet another schematic view showing the structure of the MAC-CE TAC signaling according to an embodiment of the present disclosure;

FIG. 20 is still yet another flow chart of the communication method based on M-TRPs according to an embodiment of the present disclosure;

FIG. 21 is a flow chart of a communication method based on M-TRPs according to an embodiment of the present disclosure;

FIG. 22 is a schematic view showing a communication apparatus based on M-TRPs according to an embodiment of the present disclosure;

FIG. 23 is another schematic view showing the communication apparatus based on M-TRPs according to an embodiment of the present disclosure;

FIG. 24 is schematic view showing a communication apparatus based on M-TRPs according to an embodiment of the present disclosure; and

FIG. 25 is another schematic view showing the communication apparatus based on M-TRPs according to an embodiment of the present disclosure.

## DETAILED DESCRIPTION

The present disclosure will be described hereinafter in details in conjunction with illustrative embodiments, and examples thereof are shown in the drawings. Unless otherwise specified, identical numerals in different drawings represent identical or similar elements. The implementations in the following description do not include all implementations consistent with the embodiments of the present disclosure.

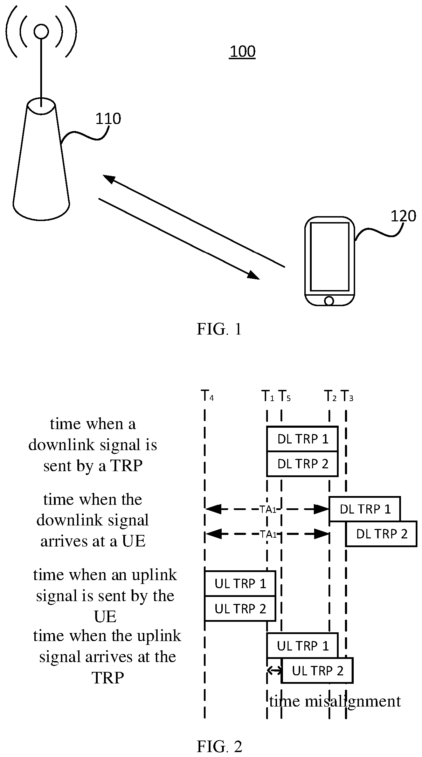

A communication method based on M-TRPs involved in the embodiments of the present disclosure may be applied to a wireless communication system 100 in FIG. 1. The wireless communication system includes a network device 110 and a terminal 120. It should be appreciated that, the wireless communication system in FIG. 1 is for illustrative purposes only, and it may further include the other network devices not shown in FIG. 1, e.g., a core network device, a wireless relay device, and a wireless backhaul device. In the embodiments of the present disclosure, a quantity of network devices and a quantity of terminals included in the wireless communication system will not be particularly defined.

It should be further appreciated that, the wireless communication system in the embodiments of the present disclosure is a network for providing a wireless communication function. The wireless communication system may adopt different communication technologies, e.g., Code Division Multiple Access (CDMA), Wideband Code Division Multiple Access (WCDMA), Time Division Multiple Access (TDMA), Frequency Division Multiple Access (FDMA), Orthogonal Frequency-Division Multiple Access (OFDMA), Single Carrier FDMA (SC-FDMA), and Carrier Sense Multiple Access with Collision Avoidance. Depending on such factors of different networks as capacity, rate and delay, the network includes a 2nd-Generation (2G) network, a 3rd-Generation (3G) network, a 4th-Generation (4G) network, or a future evolved network, e.g., a 5th-Generation Wireless Communication System (5G) network, which is also called as New Radio (NR). For ease of description, sometimes the wireless communication network is also called as network for short in the embodiments of the present disclosure.

Further, the network device 110 involved in the embodiments of the present disclosure is also called as a wireless access network device. The wireless access network device may be: a base station; an evolved Node B (eNB); a home eNB; an Access Point (AP), a wireless relay node, a wireless backhaul node or a Transmission Point (TP) in a Wireless networking (Wi-Fi™) system; a gNB in a NR system; or an assembly or a device of the base station. In a case that the communication system is a Vehicle to Everything (V2X) communication system, the network device may also be a vehicle-mounted device. It should be appreciated that, in the embodiments of the present disclosure, a specific technology adopted by the network device and a specific device form thereof will not be particularly defined herein.

Further, the terminal 120 involved in the embodiments of the present disclosure may also be called as terminal device, UE, Mobile Station (MS), Mobile Terminal (MT), etc., and it is a device for providing voice and/or data connectivity to a user. For example, the terminal may be a handheld device having a wireless connection function, a vehicle-mounted device, etc. Currently, some examples of the terminal include mobile phone, Pocket Personal Computer (PPC), handheld computer, Personal Digital Assistant (PDA), laptop computer, tablet computer, wearable device, or vehicle-mounted device. In addition, in a case that the communication is the V2X communication system, the terminal may also be a vehicle-mounted device. It should be appreciated that, in the embodiments of the present disclosure, a specific technology adopted by the terminal and a specific device form thereof will not be particularly defined herein.

In the embodiments of the present disclosure, data is transmitted between the network device 110 and the terminal 120 through any feasible wireless communication technology. A transmission channel for sending data from the network device 110 to the terminal 120 is called as downlink (DL), and a transmission channel for sending data from the terminal 120 to the network device 110 is called as uplink (UL). It should be appreciated that, the network device involved in the embodiments of the present disclosure is a base station. Of course, the network device may also be any other possible network device, and the terminal may be any other possible terminal, which will not be particularly defined herein.

It should be appreciated that, in a 5G scheme, a base station may include one or more TRPs. Each TRP may correspond to beams in different directions, so as to facilitate the communication performed by a corresponding terminal.

In the related art, in a MIMO M-TRP system in Release 17 (R17), merely one TA and one TA reference time are taken into consideration for two TRPs. It is presumed that the two TRPs are TRP1 and TRP2, and the TA and the TA reference time are merely aligned with TRP 1. Usually, the two TRPs are spaced apart from a UE by different distances, and the transmission between the UE and the TRPs have different delays. Hence, for a base station, an uplink signal and a downlink signal at TRP1 are aligned with each other in time, but an uplink signal and a downlink signal at TRP2 cannot be aligned with each other in time, which leads to an ISI between the uplink signal and the downlink signal, and thereby causing a system performance loss.

During the standardization of R17, in Sections 8.1.1 (Multi-beam), 8.1.2.2 (inter-cell M-TRP) and 8.1.2.1 (M-TRP PDCCH/PUCCH/PUSCH) of the Summary of Conference, two TA scenarios were briefly discussed, but no conclusion was made due to no enough time. In a 94th Radio Access Network (RAN) meeting of the 3rd Generation Partnership Projection (3GPP), the description about a work item for Rel-18 MIMO evolution technology was given. For a M-TRP system based on Multiple Downlink Control Information (M-DCI), the transmission through two TAs is taken into consideration. In a case that the TA and the TA reference time are taken into consideration, there may exist the following four possible circumstances.

First circumstance: one TA (based on TRP1) and one TA reference time (based on TRP1) are adopted.

Second circumstance: one TA (based on TRP1) and two TA reference times (TRP-specific) are adopted.

Third circumstance: two TAs (TRP-specific) and one TA reference time (based on TRP1) are adopted.

Fourth circumstance: two TAs (TRP-specific) and two TA reference times (TRP-specific) are adopted.

The term "TRP-specific" represents a specific TRP, i.e., specific relevant information is configured for the TRP, e.g., the TA and/or the TA reference time.

With respect to the above-mentioned four circumstances, basic information is shown in Table 1.

Table 1

|  | TRP1 | TRP2 |
|---|---|---|
| Distance to UE | $D_1$ | $D_2$ |
| Transmission time of TRP | $T$ | $T$ |
| Propagation delay | $\Delta t_1 = D_1/c$ | $\Delta t_2 = D_2/c$ |
| Reception time of UE | $T + \Delta t_1$ | $T + \Delta t_2$ |

In Table 1, c represents a velocity of light.

Based on the above-mentioned four circumstances, the transmission time and the reception time in each circumstance may refer to the following Tables 2 to 5.

Table 2

|  | TRP1 | TRP2 |
|---|---|---|
| TA reference time | $T + \Delta t_1$ | $T + \Delta t_1$ |
| TA | $T_{TA,1} = 2\Delta t_1$ | $T_{TA,1} = 2\Delta t_1$ |
| Transmission time of UE | $T + \Delta t_1 - T_{TA,1}$ | $T + \Delta t_1 - T_{TA,1}$ |
| Reception time of TRP | $T + 2\Delta t_1 - T_{TA,1}$ | $T + \Delta t_1 + \Delta t_2 - T_{TA,1}$ |
| Reception time offset of TRP | $2\Delta t_1 - T_{TA,1} = 0$ | $\Delta t_1 + \Delta t_2 - T_{TA,1} = \Delta t_2 - \Delta t_1$ |
| Reception time offset of two TRPs | $T_{offset} = \|(T + 2\Delta t_1 - T_{TA,1}) - (T + \Delta t_1 + \Delta t_2 - T_{TA,1})\| = \|\Delta t_1 - \Delta t_2\|$ | |

It should be appreciated that, Table 2 is a time table for the first circumstances.

With respect to the first circumstance, FIG. 2 shows transmission times of an uplink signal and a downlink signal and a TA, where $T_1$ represents a transmission time of the downlink signal, $T_2$ represents a time when the UE receives the downlink signal from TRP1, $T_3$ represents a time when the UE receives the downlink signal from TRP 2, $T_4$ represents a time when the UE sends the uplink signal to TRP1, and $T_5$ represents a time when the TRP2 receives the uplink signal from the UE. In order to ensure the uplink signal and the downlink signal are aligned in time, the time when TRP receives the uplink signal from the UE is also $T_1$. As shown in FIG. 2, in a case that one TA and one TA reference time are adopted, with TRP1 as a reference, $T_4$ and $T_5$ are the same, a time when TRP1 receives the uplink signal from the UE is $T_1$, and the time of the uplink signal is aligned with the time of the downlink signal at TRP1. However, a time when TRP2 receives the uplink signal from the UE is not $T_1$. Hence, there is a misalignment phenomenon between the time of the uplink signal and the time of the downlink signal at TRP2. In addition, the misaligned time offset is the same as a difference between the time when the UE receives the downlink signal from TRP1 and the time when the UE receives the downlink signal from TRP2.

Table 3

|  | TRP1 | TRP2 |
|---|---|---|
| TA reference time | $T + \Delta t_1$ | $T + \Delta t_2$ |
| TA | $T_{TA,1} = 2\Delta t_1$ | $T_{TA,1} = 2\Delta t_1$ |
| Transmission time of UE | $T + \Delta t_1 - T_{TA,1}$ | $T + \Delta t_2 - T_{TA,1}$ |
| Reception time of TRP | $T + 2\Delta t_1 - T_{TA,1}$ | $T + 2\Delta t_2 - T_{TA,1}$ |
| Reception time offset of TRP | $2\Delta t_1 - T_{TA,1} = 0$ | $2\Delta t_2 - T_{TA,1} = 2\Delta t_2 - 2\Delta t_1$ |
| Reception time offset of two TRPs | $T_{offset} = \|(T + 2\Delta t_1 - T_{TA,1}) - (T + 2\Delta t_2 - T_{TA,1})\| = \|2\Delta t_1 - 2\Delta t_2\|$ | |

It should be appreciated that, Table 3 is a time table for the second circumstances.

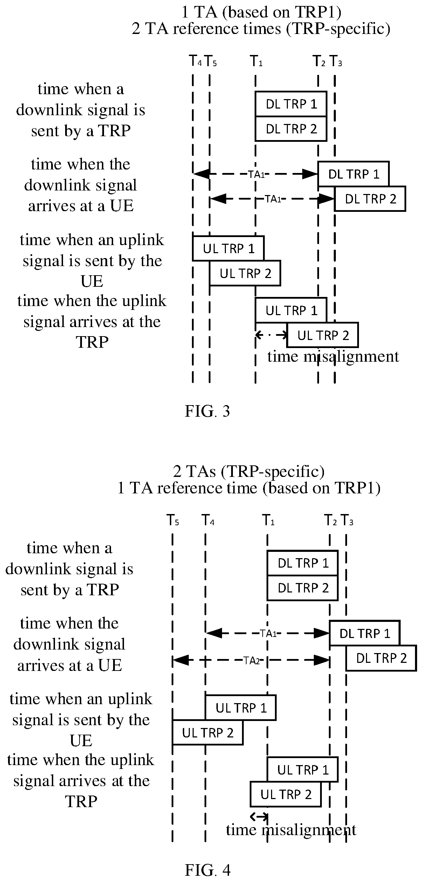

With respect to the second circumstance, FIG. 3 shows transmission times of an uplink signal and a downlink signal and a TA. Different from FIG. 2, $T_5$ in FIG. 3 represents a time when the UE sends the uplink signal to TRP2. As shown in FIG. 3, because merely one TA is adopted, the UE selects to send the uplink signal to different TRPs in advance based on different TA reference times. The TA is based on TRP1, a time when TRP1 receives the uplink signal from the UE

is $T_1$, and the time of the uplink signal is aligned with the time of the downlink signal at TRP1. However, a time when TRP2 receives the uplink signal from the UE is not $T_1$. Hence, there is still a misalignment phenomenon between the time of the uplink signal and the time of the downlink signal at TRP2. In addition, the misaligned time offset is larger than that in the first circumstance, and the misalignment phenomenon is more serious.

Table 4

| | TRP1 | TRP2 |
|---|---|---|
| TA reference time | $T + \Delta t_1$ | $T + \Delta t_1$ |
| TA | $T_{TA,1} = 2\Delta t_1$ | $T_{TA,2} = 2\Delta t_2$ |
| Transmission time of UE | $T + \Delta t_1 - T_{TA,1}$ | $T + \Delta t_1 - T_{TA,2}$ |
| Reception time of TRP | $T + 2\Delta t_1 - T_{TA,1}$ | $T + \Delta t_1 + \Delta t_2 - T_{TA,2}$ |
| Reception time offset of TRP | $2\Delta t_1 - T_{TA,1} = 0$ | $\Delta t_1 + \Delta t_2 - T_{TA,2} = \Delta t_1 - \Delta t_2$ |
| Reception time offset of two TRPs | $T_{offset} = |(T + 2\Delta t_1 - T_{TA,1}) - (T + \Delta t_1 + \Delta t_2 - T_{TA,2})| = |\Delta t_2 - \Delta t_1|$ | |

It should be appreciated that, Table 4 is a time table for the above-mentioned third circumstance. With respect to the third circumstance, FIG. 4 shows transmission times of an uplink signal and a downlink signal and TAs. Different from FIG. 2, $T_5$ in FIG. 4 represents a time when the UE sends the uplink signal to TRP2. As shown in FIG. 4, although different TAs are adopted, merely one TA reference time is still adopted. The TA reference time is based on TRP1, a time when TRP1 receives the uplink signal from the UE is $T_1$, and the time of the uplink signal is aligned with the time of the downlink signal at TRP1. However, a time when TRP2 receives the uplink signal from the UE is not $T_1$. Hence, there is still a misalignment phenomenon between the time of the uplink signal and the time of the downlink signal at TRP2. In addition, the misaligned time offset is similar to that in the first circumstance, but the base station may receive the downlink signal through a certain TRP in advance.

Table 5

| | TRP1 | TRP2 |
|---|---|---|
| TA reference time | $T + \Delta t_1$ | $T + \Delta t_2$ |
| TA | $T_{TA,1} = 2\Delta t_1$ | $T_{TA,2} = 2\Delta t_2$ |
| Transmission time of UE | $T + \Delta t_1 - T_{TA,1}$ | $T + \Delta t_2 - T_{TA,2}$ |
| Reception time of TRP | $T + 2\Delta t_1 - T_{TA,1}$ | $T + 2\Delta t_2 - T_{TA,2}$ |
| Reception time offset of TRP | $2\Delta t_1 - T_{TA,1} = 0$ | $2\Delta t_2 - T_{TA,2} = 0$ |
| Reception time offset of two TRPs | $T_{offset} = |(T + 2\Delta t_1 - T_{TA,1}) - (T + 2\Delta t_2 - T_{TA,2})| = 0$ | |

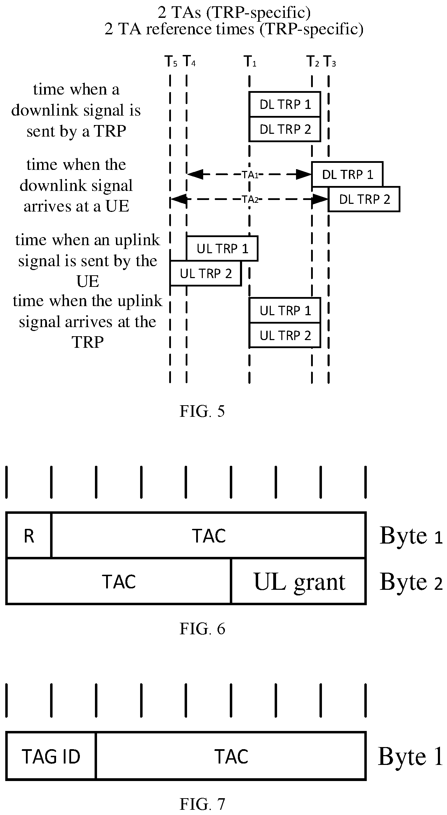

It should be appreciated that, Table 5 is a time table for the above-mentioned fourth circumstance. With respect to the fourth circumstance, FIG. 5 shows transmission times of an uplink signal and a downlink signal and TAs. Different from FIG. 2, $T_5$ in FIG. 5 represents a time when the UE sends the uplink signal to TRP2. In order to ensure that the time of the uplink signal is aligned with the time of the downlink signal, a time when the TRP receives the uplink signal from the UE should also be $T_1$. As shown in FIG. 5, in this circumstance, different TAs and different TA reference times are configured. A time when TRP 1 receives the uplink signal from the UE is $T_1$, and the time of the uplink signal is aligned with the time of the downlink signal at TRP1. In addition, a time when TRP2 receives the uplink signal from the UE is also $T_1$, and the time of the uplink signal is also aligned with the time of the downlink signal at TRP2. Hence, for both TRP1 and TRP2, the time of the uplink signal may be aligned with the time of the downlink signal at $T_1$, and no misalignment phenomenon may occur.

In the related art, the R17 MIMO M-TRP system merely supports the use of one TA and one TA reference time, e.g., a TA and a TA reference time designed based on TRP1, and the time of the uplink signal is aligned with the time of the downlink signal merely at one TRP, as shown in FIG. 2. At this time, the TA is calculated through the following formula (1).

$$T_{TA} = (N_{TA} + N_{TA,offset})T_c$$

$$\ldots\ldots(1)$$

In the formula (1), $T_c$ represents a basic time unit, such as a basic time unit in 5G NR, e.g., $T_c$ = 0.509ns, and ns is a time unit, i.e., nanosecond. $N_{TA,offset}$ is preconfigured through a signaling. In some examples, $N_{TA,offset}$ is configured through *n-TimingAdvanceOffset* in *ServingCellConfigCommonSIB* or *ServingCellConfigCommon.* Of course, in a case that $N_{TA,offset}$ is not configured, it may be a default value within a Frequency Range (FR) 1, i.e., 25600. It should be appreciated that, a specific configured value may refer to Table 7.1.2-2 in 3GPP TS 38.133, which will not be particularly defined herein. $N_{TA}$ is indicated in a Random Access Response (RAR) in a random access procedure. In some examples, in a case that a subcarrier spacing is $2^\mu \cdot 15kHz,$ an initial $N_{TA}$ is indicated in a RAR TAC command. For example, the initial $N_{TA}$ is calculated through the following formula (2).

$$N_{TA} = T_A \cdot 16 \cdot 64/2^\mu$$

$$\ldots\ldots(2)$$

In the formula (2), $T_A$ represents a TA parameter value indicated in the RAR TAC. In some examples, $T_A$ has a value of 0, 1, 2, ..., 3846, which is indicated in 12 bits. FIG. 6 shows a signaling structure of the RAR TAC. As shown in FIG. 6, the signaling structure is two-Byte (B) structure having 16 bits, including a reserved bit R, a 12-bit TAC and a 3-bit UL Grant. The UL Grant is used to indicate that the UE is allowed to transmit data on a corresponding uplink channel.

Next, the base station updates the TA through a MAC-CE. For example, the TA is updated through updating $N_{TA}$. In some examples, the updated $N_{TA}$, i.e., $N_{TA,new}$, is calculated through the following formula (3).

$$N_{TA,new} = N_{TA,old} + (T_A - 31) \cdot 16 \cdot 64/2^\mu$$

$$\ldots\ldots(3)$$

In the formula (3), $N_{TA,old}$ represents an initial TA indicated in the RAR, and $T_A$ has a value of 0, 1, 2, ..., 63, which indicated in 6 bits in the MAC-CE. FIG. 7 shows a signaling structure of the MAC-CE TAC. As shown in FIG. 7, the signaling structure is a 1B structure having 8 bits, including a 2-bit Timing Advance Group Identification (TAG ID), and a 6-bit TAC. The TAC is used to present the TAC in the MAC-CE for updating the value of TA.

However, in the related art, in a case that the TA and the TA reference time are both based on one TRP (e.g., TRP1), the specific analysis thereof is like that in the first circumstance. At this time, the alignment of the time of the uplink signal with the time of the downlink signal is completed at TRP1, but it is impossible to achieve the alignment at TRP2. Hence, an interference is caused between the uplink signal and the downlink signal at TRP2, and thereby the system performance loss occurs.

Hence, the present disclosure provides in some embodiments a communication method based on M-TRPs, an apparatus, a device and a storage medium. A network device determines indication information for indicating TA information about at least two TRPs, so that a UE sends uplink data to the at least two TRPs based on the indication information. In this way, it is able to relieve the ISI caused by the misalignment of an uplink signal with a downlink signal, thereby to improve the system performance.

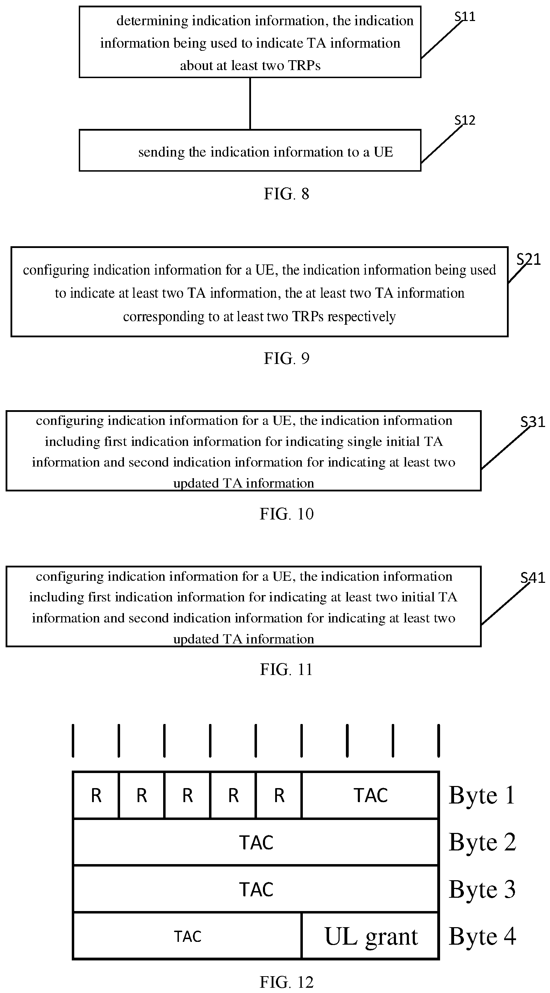

FIG. 8 is a flow chart of a communication method based on M-TRPs according to an embodiment of the present disclosure. As shown in FIG. 8, the communication method based on M-TRPs is applied to a network device, and includes the following steps.

In Step S11, indication information is determined. The indication information is used to indicate TA information about at least two TRPs.

In some embodiments of the present disclosure, the indication information is used to indicate corresponding TA information for a plurality of different TRPs.

In Step 12, the indication information is sent to a terminal.

The scheme involved in the embodiments of the present disclosure is applied to a M-TRP system, e.g., intra-cell or inter-cell, which will not be particularly defined herein.

According to the embodiments of the present disclosure, the corresponding TA information is determined for different TRPs, so as to enable an uplink time and a downlink time for different TRPs to be closer to each other, thereby to relieve an ISI, and improve system communication performance.

FIG. 9 is a flow chart of a communication method based on M-TRPs according to an embodiment of the present disclosure. As shown in FIG. 9, the communication method is applied to a network device, and includes the following step.

In Step S21, indication information is configured for a UE. The indication information is used to indicate at least two TA information, and the at least two TA information correspond to at least two TRPs respectively.

In some embodiments of the present disclosure, the indication information includes a plurality of TA information, and each TA information corresponds to one TRP. It should be appreciated that, each TRP merely corresponds to one TA information, and each TA information also merely corresponds to one TRP.

According to the embodiments of the present disclosure, the TA information is independently configured for each TRP, so as to enable an uplink time and a downlink time for different TRPs to be closer to each other, thereby to relieve an ISI, and improve system communication performance.

In the communication method provided in this embodiment of the present disclosure, the indication information includes first indication information and second indication information. The first indication information is used to indicate initial TA information, and the second indication information is used to indicate updated TA information.

In some embodiments of the present disclosure, the indication information includes the first indication information for indicating the initial TA information, so that the UE determines an initial TA based on the first indication information, and sends uplink data to a plurality of TRPs based on the initial TA. Of course, the indication information further includes the second indication information for indicating the updated TA information, so that the UE updates the initial TA based on the second indication information, and sends the uplink data to the plurality of TRPs based on the updated TA.

It should be appreciated that, through updating the initial TA based on the second indication information, it is able to ensure that the TA is adjusted dynamically in a random access procedure, thereby to relieve the ISI in a better manner and improve the system communication performance.

In the communication method provided in this embodiment of the present disclosure, the first indication information is an RAR, and the second indication information is a MAC-CE.

FIG. 10 is a flow chart of a communication method based on M-TRPs according to an embodiment of the present disclosure. As shown in FIG. 10, the communication method is applied to a network device, and includes the following step.

In Step S31, indication information is configured to a UE. The indication information includes first indication information for indicating single initial TA information, and second indication information for indicating at least two updated TA information.

In some embodiments of the present disclosure, the first indication information includes one initial TA information for indicating TAs corresponding to a plurality of TRPs. In addition, the second indication information includes a plurality of updated TA information, and each updated TA information is used to indicate a TA corresponding to the TRP. The at least two updated TA information correspond to the at least two TRPs respectively.

According to the embodiments of the present disclosure, the updated TA information is configured for each of the plurality of TRPs, so as to enable the uplink time and the downlink time of the TRP to be closer to each other in a case that the TA is adjusted dynamically, thereby to relieve the ISI and improve the system communication performance.

FIG. 11 is a flow chart of a communication method based on M-TRPs according to an embodiment of the present disclosure. As shown in FIG. 11, the communication method is applied to a network device, and includes the following step.

In Step S41, indication information is configured for a UE. The indication information includes first indication information for indicating at least two initial TA information and second indication information for indicating at least two updated TA information.

In some embodiments of the present disclosure, the first indication information includes a plurality of initial TA information, and each initial TA information is used to indicate a TA corresponding to the TRP. In addition, the second indication information includes a plurality of updated TA information, and each updated TA information is used to indicate a TA corresponding to the TRP. The at least two initial TA Information correspond to the at least two TRPs respectively, and the at least two updated TA information correspond to the at least two TRPs respectively.

According to the embodiments of the present disclosure, the initial TA information and the updated TA information are configured for each of the plurality of TRPs, so as to enable the uplink time and the downlink time of the TRP to be closer to each other, thereby to relieve the ISI and improve the system communication performance.

In the communication method provided in this embodiment of the present disclosure, the first indication information includes at least two first TAC indication fields, and the at least two first TAC indication fields correspond to the at least two initial TA information respectively.

In some embodiments of the present disclosure, each first TAC indication field is used to indicate the initial TA information corresponding to a TAC. For example, it is presumed that the first TAC indication field has 12 bits, the first indication information is a RAR, and a quantity of TRPs is 2. At this time, FIG. 12 shows a RAR TAC signaling structure. As shown in FIG. 12, on the basis of FIG. 6, the new first TAC indication field is introduced to indicate the initial TA information corresponding to a second TAC. In order to ensure the integrity of the signaling bytes, unused bits may serve as reserved bits.

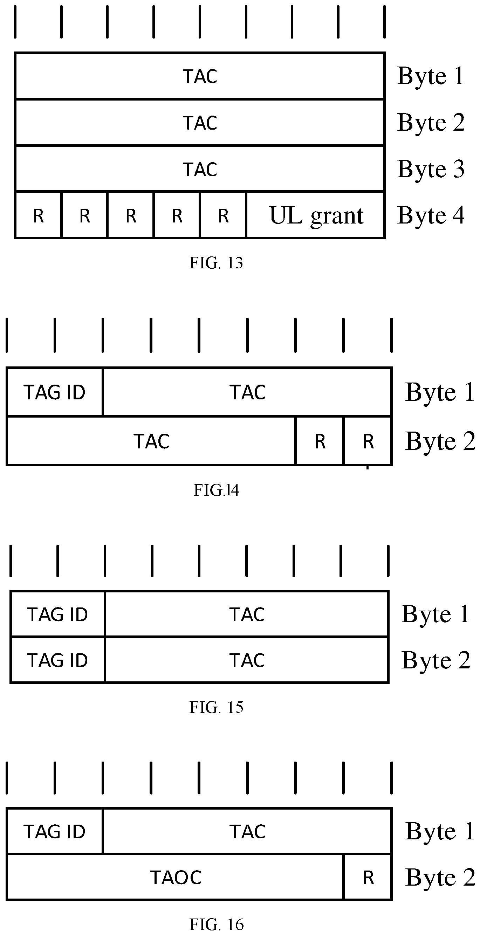

Of course, in another embodiment of the present disclosure, the RAR TAC signaling structure is also shown in FIG. 13, i.e., the preceding reserved bits are moved to byte 4, so as to ensure that the previous three bytes are all used to indicate the initial TA information corresponding to each TAC. Of course, it should be appreciated that, in a case that more initial TA information needs to be indicated, a corresponding amount of bits may be further introduced to form the first TAC indication field, which will not be particularly defined herein.

In the communication method provided in this embodiment of the present disclosure, different first TAC indication fields are used to indicate the initial TA information corresponding to different TACs, so the specific information may be the same or different. In a case that the specific information of different first TAC indication fields have the same numerical value, the RAR TAC signaling structure in FIG. 6 may also be used, so as to reduce a size of the RAR TAC signaling, thereby to facilitate the data transmission.

At this time, in some embodiments of the present disclosure, the initial $N_{TA}$ corresponding to each TAC is directly calculated through the formula (2), and then the corresponding initial TA is calculated through the formula (1).

Of course, in some other embodiments of the present disclosure, in a case that the RAR TAC signaling structure in FIG. 12 or 13 is used, the specific information of different first TAC indication fields may be the same or different. In some embodiments of the present disclosure, the initial $N_{TA}$ corresponding to each TAC is directly calculated through the following formula (4), and then the corresponding initial TA is calculated through the formula (1).

$$N_{TA,x} = T_{A,x} \cdot 16 \cdot 64/2^{\mu}$$

$$\ldots\ldots(4)$$

In the formula (4), $T_{A,x}$ represents the initial TA information corresponding to an $x^{th}$ TAC. Hence, it should be appreciated that, $T_{A,x}$ is indicated in the first TAC indication field corresponding to the $x^{th}$ TAC. For example, $T_{A,1}$ is indicated in the first TAC indication field corresponding a first TACT, and $T_{A,2}$ is indicated in a first TAC indication field corresponding to a second TAC. Presumed that $T_{A,x}$ has a value of 0, 1, 2, ..., 3846, each first TAC indication field has 12 bits. At least two first TAC indication fields may occupy X=12 bits, where X represents a quantity of bits occupied by the plurality of first TAC indication fields.

In the communication method provided in this embodiment of the present disclosure, the second indication information includes a single second TAC indication field, and the single second TAC indication field is used to indicate at least two updated TA information.

In embodiments of the present disclosure, the single second TAC indication field is used to indicate the updated TA information corresponding to different TACs. It should be appreciated that, at this time the same updated TA information is used to update the initial TAs for different TACs. In some embodiments of the present disclosure, a MAC-CE TAC signaling structure in FIG. 7 is used, and TAC in FIG. 7 represents the second TAC indication field.

In some embodiments of the present disclosure, the MAC-CE TAC signaling structure in FIG. 7 is used to indicate the updated TA information corresponding to different TACs, and $N_{TA,new}$ is calculated through the formula (3). $N_{TA,new}$ is used to update the TAs for different TACs.

In embodiments of the present disclosure, the single second TAC indication field is used to update the TAs corresponding to different TACs, so as to enable the uplink time and the downlink time for different TRPs to be closer to each other in a procedure of dynamically updating the TA, thereby to relieve the ISI, and improve system communication performance.

In the communication method provided in this embodiment of the present disclosure, the second indication information includes at least two second TAC indication fields, and the at least two second TAC indication fields correspond to the at least two updated TA information respectively.

In some embodiments of the present disclosure, each second TAC indication field is used to indicate the updated TA information corresponding to one TAC. For example, it is presumed that the second TAC indication field has 6 bits, the second indication information is a MAC-CE, and a quantity of TRPs is 2. At this time, FIG. 14 shows a MAC-CE TAC signaling structure. As shown in FIG. 14, on the basis of FIG. 7, the new second TAC indication field is introduced to indicate the updated TA information corresponding to a second TAC. In order to ensure the integrity of the signaling bytes, unused bits may serve as reserved bits.

Of course, in another embodiment of the present disclosure, the MAC-CE TAC signaling structure is also shown in FIG. 15, and a corresponding TAG ID is configured to the newly-introduced second TAC indication field, so as to utilize all bits in the signaling. In addition, the second TAC indication field is also used to indicate the updated TA information for different TACs in different TAGs. In some cases, the MAC-CE TAC signaling structure in FIG. 14 is merely used to indicate the updated TA information for different TACs in the same TAG.

It should be appreciated that, in a case that more updated TA information needs to be indicated, a corresponding amount of bits may be further introduced to form each second TAC indication field, and vacant bits may serve as reserved bits, or a corresponding TAG ID is configured for each second TAC, which will not be particularly defined herein.

In some embodiments of the present disclosure, in a case that the MAC-CE TAC signaling structure in FIG. 14 or 15 is used to indicate the updated TA information corresponding to different TACs, the corresponding $N_{TA,new}$ is calculated through the following formula (5).

$$N_{TA,new,x} = N_{TA,old,x} + (T_{A,x} - 31) \cdot 16 \cdot 64/2^{\mu}$$

$$\ldots\ldots(5)$$

In the formula (5), $N_{TA,new,x}$ represents an updated $N_{TA}$ for an $x^{th}$ TAC, $N_{TA,old,x}$ represents an initial $N_{TA}$ for the $x^{th}$ TAC, and $T_{A,x}$ represents the updated TA information corresponding to the $x^{th}$ TAC. Hence, it should be appreciated that, $T_{A,x}$ is indicated in the second TAC indication field corresponding to the $x^{th}$ TAC. For example, $T_{A,1}$ is indicated in the second TAC indication field corresponding to a first TAC, and $T_{A,2}$ is indicated in the second TAC indication field corresponding to a second TAC. Presumed that each second TAC indication field has 6 bits, $T_{A,x}$ has a value of 0, 1, 2, ..., 63. The at least two second TAC indication fields may occupy X=6 bits, where X represents a quantity of bits occupied by the plurality of second TAC indication fields.

It should be appreciated that, $N_{TA,new}$ is used to update the TAs for different TACs, e.g., $N_{TA,new,x}$ is used to update the TA for the $x^{th}$ TAC.

In the communication method provided in this embodiment of the present disclosure, the second indication information includes a second TAC indication field and a TA offset indication field, the second TAC indication field is used to indicate the TA information, and the TA offset indication field is used to indicate offset information about a TA.

In an embodiment of the present disclosure, the TA offset indication field is introduced into the MAC-CE TAC signaling. The TA offset indication field is used to indicate offset information about a TA corresponding to a TAC other than the TAC indicated in the second TAC indication field. In other words, the MAC-CE TAC signaling includes the updated TA information for the TAC indicated in the second TAC indication field, and the updated TA information for the other TAC is determined based on a TA offset.

In the communication method provided in this embodiment of the present disclosure, the offset information about the TA includes relative offset information or absolute offset information. The relative offset information is an offset relative to the TA information indicated in the second TAC indication field, the absolute offset information is determined based on a quantization gradient, and the quantization gradient is determined based on the TA information indicated in the second TAC indication field.

In some embodiments of the present disclosure, in a case that the offset information about the TA is the relative offset information, the second TAC indication field is used to indicate the updated TA information for one TAC, and the updated TA information for the other TAC is indicated based on the relative offset information.

For example, it is presumed that the second TAC indication field has 6 bits, the second indication information is a MAC-CE, and a quantity of TRPs is 2. At this time, FIG. 16 shows the MAC-CE TAC signaling structure. As shown in FIG. 16, on the basis of FIG. 7, a first Time Advance Offset Command (TAOC) indication field is newly introduced, so as to indicate the updated TA information corresponding to the second TAC. In order to ensure the integrity of the signaling bytes, vacant bits may serve as reserved bits.

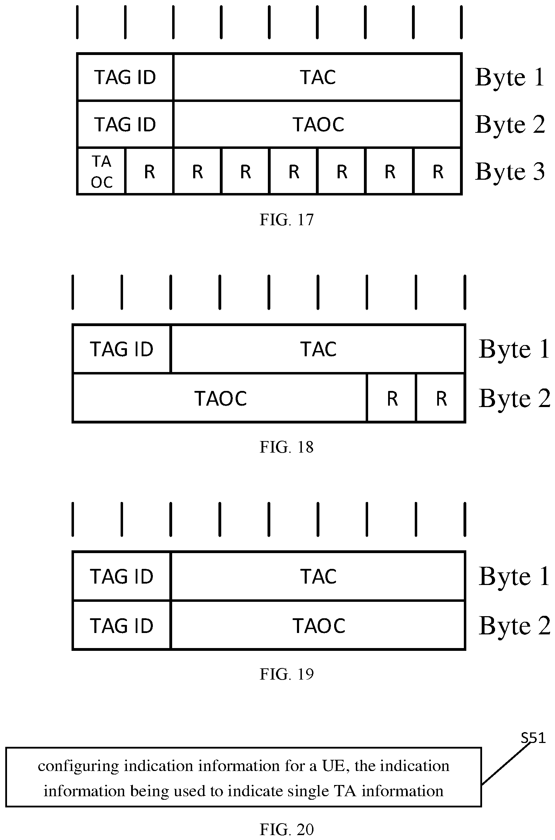

Of course, in another embodiment of the present disclosure, FIG. 17 also shows the MAC-CE TAC signaling structure, and a corresponding TAG ID is configured for the newly-introduced first TAOC indication field, so as to indicate the updated TA information for different TACs in different TAGs. In some cases, the MAC-CE TAC signaling structure in FIG. 16 is merely used to indicate the updated TA information for different TACs in the same TAG.

It should be appreciated that, in a case that more updated TA information needs to be indicated, a corresponding amount of bits may be further introduced to form the first TAOC indication field, and vacant bits may serve as reserved bits, or a corresponding TAG ID is configured for the TAC indication field and each first TAOC indication field, which will not be particularly defined herein.

It can be seen that, the first TAOC indication field has one more bit than the second TAC indication field. It should be appreciated that, this bit is used to indicate a sign of the offset. For example, a first or last bit of the first TAOC indication field is used to indicate the sign of the offset. Presumed that the second TAC indication field has 6 bits, the first TAOC indication field may have 7 bits. In other words, the quantity of bits of the first TAOC indication field is one more than the quantity of bits of the second TAC indication field, so as to indicate the sign of the offset.

In some embodiments of the present disclosure, a value "1" is used to indicate that the offset is positive, and a value "0" is used to indicate that the offset is negative. Of course, in the other embodiments of the present disclosure, the value "1" is used to indicate that the offset is negative, and the value "0" is used to indicate that the offset is positive, which will not be particularly defined herein.

In some embodiments of the present disclosure, in a case that the MAC-CE TAC signaling structure in FIG. 16 or 17 is used to indicate the updated TA information corresponding to different TACs, $N_{TA,new}$ corresponding to the second TAC indication field is calculated through the formula (5), and it is marked as $N_{TA,new,1}$. $N_{TA,new,y}$ corresponding to the first TAOC indication field is calculated through the following formula (6).

$$N_{TA,new,y} = N_{TA,old,y} + \left(T_{A,1} + \triangle T_A - 31\right) \cdot 16 \cdot 64/2^{\mu}$$

$$\ldots\ldots(6)$$

In the formula (6), $N_{TA,new,y}$ represents an updated $N_{TA}$ for a y$^{th}$ TAC other than the TAC corresponding to the second TAC indication field, $N_{TA,old,y}$ represents an initial $N_{TA}$ for the y$^{th}$ TAC other than the TAC corresponding to the second TAC indication field, $T_{A,1}$ represents the updated TA information indicated in the second TAC indication field, and $\triangle T_A$ represents a relative offset. Presumed that the second TAC indication field has 6 bits, $T_{A,1}$ may be 0, 1, ..., 63, and $\triangle T_A$ may be -63, -62, ..., 0, 1, ..., 63.

In some other embodiments of the present disclosure, in a case that the offset information about the TA is the absolute offset information, the second TAC indication field is used to indicate the updated TA information corresponding to one TAC, and the updated TA information corresponding to the other TAC is indicated based on the absolute offset information. The absolute offset information is determined based on the quantization gradient, and the quantization gradient is determined based on the TA information indicated in the second TAC indication field.

For example, it is presumed that the second TAC indication field has 6 bits, the second indication information is a MAC-CE, and a quantity of TRPs is 2. At this time, FIG. 18 shows the MAC-CE TAC signaling structure. As shown in FIG. 18, on the basis of FIG. 7, a second TAOC indication field, represented by TAOC, is newly introduced, so as to indicate the updated TA information corresponding to the second TAC. In order to ensure the integrity of the signaling bytes, vacant bits may serve as reserved bits.

Of course, in another embodiment of the present disclosure, FIG. 19 also shows the MAC-CE TAC signaling structure, and a corresponding TAG ID is configured for the newly-introduced second TAOC indication field, so as to indicate the updated TA information for different TACs in different TAGs. In some cases, the MAC-CE TAC signaling structure in FIG. 18 is merely used to indicate the updated TA information for different TACs in the same TAG.

It should be appreciated that, in a case that more updated TA information needs to be indicated, a corresponding amount of bits may be further introduced to form each second TAOC indication field, and vacant bits may serve as reserved bits, or a corresponding TAG ID is configured for the TAC indication field and each first TAOC indication field, which will not be particularly defined herein.

In some embodiments of the present disclosure, illustratively the second TAOC indication field in FIGS. 18 and 19 has 6 bits. However, it should be appreciated that, a quantity of bits occupied by the second TAOC indication field is determined based on the quantization gradient. The quantization gradient is determined based on the TA information indicated in the second indication field. In a case that the TA information indicated in the second indication field is calculated through the formula (5) and $N_{TA,new}$ corresponding to the second indication field is marked as $N_{TA,new,1}$, the quantization gradient may be determined based on $(T_{A,1} - 31) \cdot 16 \cdot 64/2^{\mu}$. In some embodiments of the present disclosure, different accuracy levels are preconfigured as a reference for different gradients. For example, 200 or 500 may be used as a gradient difference. Of course, the specific gradient difference of the quantization gradient may be selected randomly according to the practical need. However, it should be appreciated that, the larger the gradient difference is, the fewer the bits occupied by the second TAOC indication field is. In contrast, the smaller the gradient difference is, the more the bits occupied by the second TAOC indication field is. Hence, the quantity of bits occupied by the second TAOC indication field may be adjusted randomly based on the quantization gradient. In FIGS. 18 and 19, TAOC is merely a possible instance, and in actual use, more or less bits may be occupied by the second TAOC indication field. Of course, in order to ensure the integrity of the signaling bytes, vacant bits may serve as reserved bits.

In some embodiments of the present disclosure, the second TAOC indication field still need to have one bit to indicate a sign of the offset. For example, a value "1" is used to indicate that the offset is positive, and a value "0" is used to indicate that the offset is negative. Of course, in the other embodiments of the present disclosure, the value "1" is used to indicate that the offset is negative, and the value "0" is used to indicate that the offset is positive, which will not be particularly defined herein.

In some embodiments of the present disclosure, in a case that the MAC-CE TAC signaling structure in FIG. 18 or 19 is used to indicate the updated TA information corresponding to different TACs, $N_{TA,new}$ corresponding to the second TAC indication field is calculated through the formula (5), and it is marked as $N_{TA,new,1}$. $N_{TA,new,y}$ corresponding to the second TAOC indication field is calculated through the following formula (7).

$$N_{TA,new,y} = N_{TA,old,y} + \triangle N_{TA} \times N_{offset}$$

$$\ldots\ldots(7)$$

In the formula (7), $\triangle N_{TA}$ is indicated in the second TAOC indication field, and $N_{offset}$ represents the quantization gradient. Presumed that $T_{A,1}$ is 0, 1, ..., 63, the second TAC indication field may have 6 bits.

In the communication method provided in the embodiments of the present disclosure, the corresponding second indication information may also be configured for each TAC. Hence, the updated TA information is indicated based on each second indication information for the corresponding TAC.

For example, the MAC-CE TAC signaling structure in FIG. 7 is used, and each MAC-CE TAC signaling corresponds to one TAC. For each TAC, $N_{TA,new}$ is calculated through the formula (5), which will not be particularly defined herein.

FIG. 20 is a flow chart of a communication method based on M-TRPs according to an embodiment of the present disclosure. As shown in FIG. 20, the communication method is applied to a network device, and includes the following step.

In Step S51, indication information is configured for a UE. The indication information is used to indicate single TA information.

In the embodiments of the present disclosure, the single TA information is indicated through the indication information, so as to determine corresponding TAs for different TACs.

In the communication method provided in this embodiment of the present disclosure, the single TA information includes one of: TA information about a TRP selected from the at least two TRPs based on a predetermined rule; TA information having a largest value in the TA information about the at least two TRPs; TA information having a smallest value in the TA information about the at least two TRPs; or TA information obtained by subjecting values corresponding to the TA information about the at least two TRPs to a mean processing.

In the communication method provided in this embodiment of the present disclosure, the TA information includes at least one of a TA or a timing reference time (also called as TA reference time).

In an embodiment of the present disclosure, a TA for one TRP in a plurality of TRPs may be selected based on the predetermined rule as a single TA. Alternatively, a smallest TA in the plurality of TRPs may be selected as the single TA, i.e., $\min(N_{TA,1}, \ldots, N_{TA,x})$. Alternatively, a largest TA in the plurality of TRPs may be selected as the single TA, i.e., $\max(N_{TA,1}, \ldots, N_{TA,x})$. Alternatively, a mean value of the TAs in the plurality of TRPs may be selected as the single TA, i.e., $\mathrm{mean}(N_{TA,1}, \ldots, N_{TA,x})$. Of course, in some embodiments of the present disclosure, a median value of the TAs in the plurality of TRPs may also be selected as the single TA. It should be appreciated that, the single TA may also be determined in any way, which will not be particularly defined herein.

In an embodiment of the present disclosure, a TA reference time for one TRP in the plurality of TRPs may be selected based on the predetermined rule as a single TA reference time. Alternatively, a smallest TA reference time in the plurality of TRPs may be selected as the single TA reference time. Alternatively, a largest TA reference time in the plurality of TRPs may be selected as the single TA reference time. Alternatively, a mean value of the TA reference times in the plurality of TRPs may be selected as the single TA reference time. Of course, in some embodiments of the present disclosure, a median value of the TA reference times in the plurality of TRPs may also be selected as the single TA reference time. It should be appreciated that, the single TA reference time may also be determined in any way, which will not be particularly defined herein.

In the embodiments of the present disclosure, the specific TAs and TA reference times are configured for different TACs, so as to enable the uplink signal and the downlink signal for different TRPs to be closer to each other, thereby to prevent the occurrence of the ISI caused by the misalignment of the uplink signal with the downlink signal for the TRPs, and improve the system communication performance.

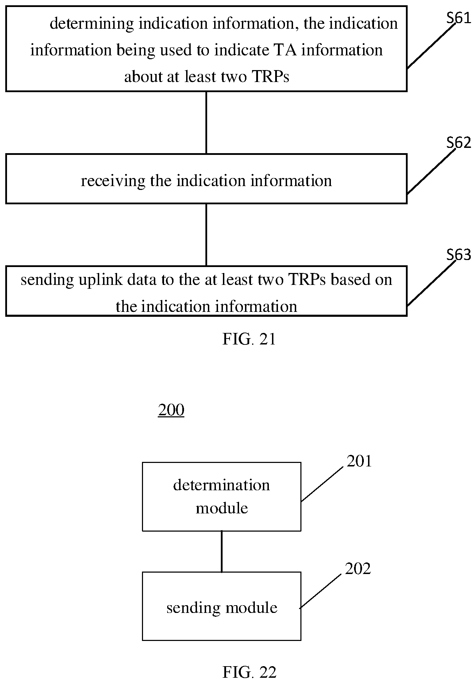

FIG. 21 is a flow chart of a communication method based on M-TRPs according to an embodiment of the present disclosure. As shown in FIG. 21, the communication method based on M-TRPs is applied to a UE, and includes the following steps.

In Step S61, indication information is determined. The indication information is used to indicate TA information about at least two TRPs.

In some embodiments of the present disclosure, the indication information is used to indicate the corresponding TA information about a plurality of TRPs.

In Step S62, the indication information is received.

In Step S63, uplink data is sent to the at least two TRPs based on the indication information.

In some embodiments of the present disclosure, the UE sends the uplink data to different TRPs at corresponding times based on the TA information about different TRPs indicated in the indication information.

The scheme involved in the embodiments of the present disclosure is applied to a M-TRP system, e.g., intra-cell or inter-cell, which will not be particularly defined herein.

In the embodiments of the present disclosure, the corresponding TA information is determined for different TRPs, so as to enable an uplink time and a downlink time for different TRPs to be closer to each other, thereby to relieve an ISI, and improve system communication performance.

In the communication method provided in this embodiment of the present disclosure, the indication information is used to indicate at least two TA information, and the at least two TA information correspond to the at least two TRPs respectively.

In the communication method provided in this embodiment of the present disclosure, the indication information includes first indication information and second indication information, the first indication information is used to indicate initial TA information, and the second indication information is used to indicate updated TA information.

In the communication method provided in this embodiment of the present disclosure, the first indication information is used to indicate single initial TA information, and the second indication information is used to indicate at least two updated TA information; and the at least two updated TA information correspond to the at least two TRPs respectively.

In the communication method provided in this embodiment of the present disclosure, the first indication information is used to indicate at least two initial TA information, and the second indication information is used to indicate at least two updated TA information; the at least two initial TA information correspond to the at least two TRPs respectively; and the at least two updated TA information correspond to the at least two TRPs respectively.

In the communication method provided in this embodiment of the present disclosure, the first indication information includes at least two first TAC indication fields, and the at least two first TAC indication fields correspond to the at least two initial TA information respectively.

In the communication method provided in this embodiment of the present disclosure, the second indication information includes a single second TAC indication field, and the single second TAC indication field is used to indicate the at least two updated TA information.

In the communication method provided in this embodiment of the present disclosure, the second indication information includes at least two second TAC indication fields, and the at least two second TAC indication fields correspond to the at least two updated TA information respectively.

In the communication method provided in this embodiment of the present disclosure, the second indication information includes a second TAC indication field and a TA offset indication field, the second TAC indication field is used to indicate the TA information, and the TA offset indication field is used to indicate offset information about a TA.

In the communication method provided in this embodiment of the present disclosure, the offset information about the TA includes relative offset information or absolute offset information, the relative offset information is an offset relative to the TA information indicated in the second TAC indication field, the absolute offset information is determined based on a quantization gradient, and the quantization gradient is determined based on the TA information indicated in the second TAC indication field.

In the communication method provided in this embodiments of the present disclosure, the indication information is used to indicate a single TA information.

In the communication method provided in this embodiment of the present disclosure, the single TA information includes one of: TA information about a TRP selected from the at least two TRPs based on a predetermined rule; TA information having a largest value in the TA information about the at least two TRPs; TA information having a smallest value in the TA information about the at least two TRPs; or TA information obtained by subjecting values corresponding to the at least two TA information about the at least two TRPs to a mean processing.

In the communication method provided in the embodiments of the present disclosure, the TA information includes at least one of a TA or a timing reference time.

In the communication method provided in this embodiment of the present disclosure, the first indication information is a random access response, and the second indication information is a MAC-CE.

It should be appreciated that, an execution mode of the UE is similar to that of the network device, so it may refer to the corresponding description about the network device, which will not be particularly defined herein.

It should be appreciated that, the implementation modes/embodiments involved in the embodiments of the present disclosure may be used in combination with the above-mentioned embodiments, or used separately. No matter whether they are used separately or in combination with the above-mentioned embodiments, an implementation principle is similar. A part of the embodiments of the present disclosure are used in a combined manner. Of course, it should be appreciated that, the illustrative description shall not be construed as limiting the embodiments of the present disclosure.

Based on the same concept, the present disclosure further provides in some embodiments a communication apparatus based on M-TRPs.

It should be appreciated that, the communication apparatus based on M-TRPs in the embodiments of the present disclosure is used to achieve the above-mentioned functions, and it includes corresponding hardware structures and/or software modules for performing these functions. Units and steps disclosed in the embodiments of the present disclosure may be implemented in the form of hardware, or a combination of a computer program and the hardware. Whether or not a certain function is executed by hardware or driving hardware through the computer program depends on specific applications and design constraints of the technical solution. Different methods may be adopted with respect to each specific application so as to achieve the described functions, without departing from the scope of the technical solutions of the present disclosure.

FIG. 22 is a schematic view showing a communication apparatus based on M-TRPs according to an embodiment of the present disclosure. As shown in FIG. 22, the communication apparatus 200 may be a base station, and includes: a determination module 201 configured to determine indication information, the indication information being used to indicate TA information about at least two TRPs; and a sending module 202 configured to send the indication information to a UE. In the embodiments of the present disclosure, the corresponding TA information is determined for different TRPs, so as to enable an uplink time and a downlink time for different TRPs to be closer to each other, thereby to relieve an ISI, and improve system communication performance.

In an embodiment of the present disclosure, the indication information is used to indicate at least two TA information, and the at least two TA information correspond to the at least two TRPs respectively.

In an embodiment of the present disclosure, the indication information includes first indication information and second indication information, the first indication information is used to indicate initial TA information, and the second indication information is used to indicate updated TA information.

In an embodiment of the present disclosure, the first indication information is used to indicate single initial TA information, the second indication information is used to indicate at least two updated TA information, and the at least two updated TA information correspond to the at least two TRPs respectively.

In an embodiment of the present disclosure, the first indication information is used to indicate at least two initial TA information, and the second indication information is used to indicate at least two updated TA information; the at least two initial TA information correspond to the at least two TRPs respectively; and the at least two updated TA information correspond to the at least two TRPs respectively.

In an embodiment of the present disclosure, the first indication information includes at least two first TAC indication fields, and the at least two first TAC indication fields correspond to the at least two initial TA information respectively.

In an embodiment of the present disclosure, the second indication information includes a single second TAC indication field, and the single second TAC indication field is used to indicate the at least two updated TA information.

In an embodiment of the present disclosure, the second indication information includes at least two second TAC indication fields, and the at least two second TAC indication fields correspond to the at least two updated TA information respectively.

In an embodiment of the present disclosure, the second indication information includes a second TAC indication field and a TA offset indication field, the second TAC indication field is used to indicate the TA information, and the TA offset indication field is used to indicate offset information about a TA.

In an embodiment of the present disclosure, the offset information about the TA includes relative offset information or absolute offset information, the relative offset information is an offset relative to the TA information indicated in the second TAC indication field, the absolute offset information is determined based on a quantization gradient, and the quantization gradient is determined based on the TA information indicated in the second TAC indication field.

In an embodiment of the present disclosure, the indication information is used to indicate a single TA information.

In an embodiment of the present disclosure, the single TA information includes one of: TA information about a TRP selected from the at least two TRPs based on a predetermined rule; TA information having a largest value in the TA information about the at least two TRPs; TA information having a smallest value in the TA information about the at least two TRPs; or TA information obtained by subjecting values corresponding to the at least two TA information about the at least two TRPs to a mean processing.

In an embodiment of the present disclosure, the TA information includes at least one of a TA or a timing reference time.

In an embodiment of the present disclosure, the first indication information is a random access response, and the second indication information is a MAC-CE.

With respect to the communication apparatus 200 in the embodiments of the present disclosure, a specific mode of performing, by each module, the operations have already been described in details in the method embodiments, and thus will not be particularly defined herein.

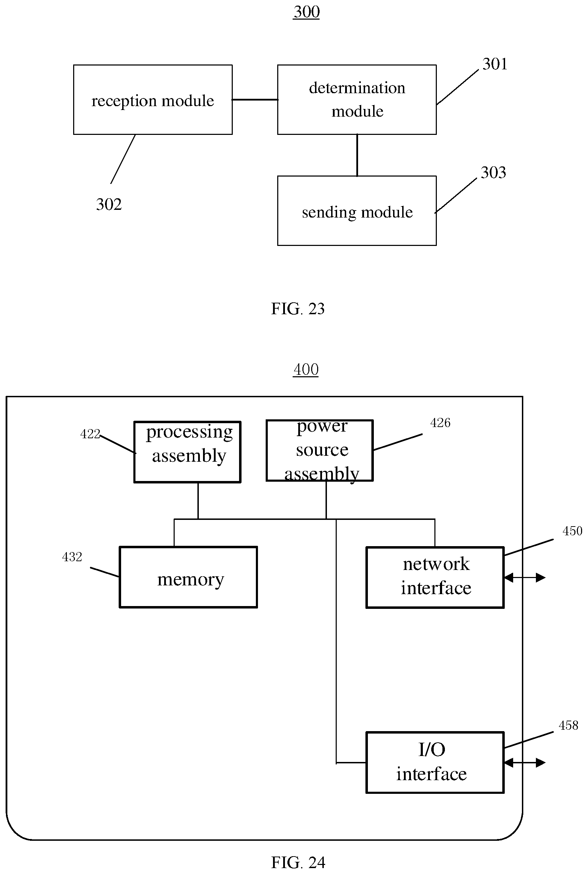

FIG. 23 is a schematic view showing a communication apparatus based on M-TRPs according to an embodiment of the present disclosure. As shown in FIG. 23, the communication apparatus 300 is a UE, and includes: a determination module 301 configured to determine indication information, the indication information being used to indicate TA information about at least two TRPs; a reception module 302 configured to receive the indication information; and a sending module 303 configured to send uplink data to the at least two TRPs based on the indication information. It should be appreciated that, the sending module 303 is usually configured to, in response to the control from the determination module 301, send the uplink data to the at least two TRPs based on the indication information.

In the embodiments of the present disclosure, the corresponding TA information is determined for different TRPs, so as to enable an uplink time and a downlink time for different TRPs to be closer to each other, thereby to relieve an ISI, and improve system communication performance.

In an embodiment of the present disclosure, the indication information is used to indicate at least two TA information, and the at least two TA information correspond to the at least two TRPs respectively.

In an embodiment of the present disclosure, the indication information includes first indication information and second indication information, the first indication information is used to indicate initial TA information, and the second indication information is used to indicate updated TA information.

In an embodiment of the present disclosure, the first indication information is used to indicate single initial TA information, and the second indication information is used to indicate at least two updated TA information; and the at least two updated TA information correspond to the at least two TRPs respectively.

In an embodiment of the present disclosure, the first indication information is used to indicate at least two initial TA information, and the second indication information is used to indicate at least two updated TA information; the at least two initial TA information correspond to the at least two TRPs respectively; and the at least two updated TA information correspond to the at least two TRPs respectively.

In an embodiment of the present disclosure, the first indication information includes at least two first TAC indication fields, and the at least two first TAC indication fields correspond to the at least two initial TA information respectively.

In an embodiment of the present disclosure, the second indication information includes a single second TAC indication field, and the single second TAC indication field is used to indicate the at least two updated TA information.

In an embodiment of the present disclosure, the second indication information includes at least two second TAC indication fields, and the at least two second TAC indication fields correspond to the at least two updated TA information respectively.

In an embodiment of the present disclosure, the second indication information includes a second TAC indication field and a TA offset indication field, the second TAC indication field is used to indicate the TA information, and the TA offset indication field is used to indicate offset information about a TA.

In an embodiment of the present disclosure, the offset information about the TA includes relative offset information or absolute offset information, the relative offset information is an offset relative to the TA information indicated in the second TAC indication field, the absolute offset information is determined based on a quantization gradient, and the quantization gradient is determined based on the TA information indicated in the second TAC indication field.

In an embodiment of the present disclosure, the indication information is used to indicate a single TA information.

In an embodiment of the present disclosure, the single TA information includes one of: TA information about a TRP selected from the at least two TRPs based on a predetermined rule; TA information having a largest value in the TA information about the at least two TRPs; TA information having a smallest value in the TA information about the at least two TRPs; or TA information obtained by subjecting values corresponding to the at least two TA information about the at least two TRPs to a mean processing.

In an embodiment of the present disclosure, the TA information includes at least one of a TA or a timing reference time.

In an embodiment of the present disclosure, the first indication information is a random access response, and the second indication information is a MAC-CE.

For the communication apparatus 300 in the embodiments of the present disclosure, a specific mode of performing, by each module, the operations has already been described in details in the method embodiments, and thus will not be particularly defined herein.

FIG. 24 is a schematic view showing a communication apparatus 400 based on M-TRPs according to an embodiment of the present disclosure. For example, the communication apparatus 400 is provided as a base station or a server. As shown in FIG. 24, the communication apparatus 400 includes a processing assembly 422, which further includes one or more processors, and memory resources represented by a memory 432 for storing therein instructions to be executed by the processing assembly 422, e.g., applications. The applications stored in the memory 432 may include one or more modules each corresponding to one group of instructions. In addition, the processing assembly 422 is configured to execute the instructions, so as to implement the communication method based on M-TRPs for the network device.

The communication apparatus 400 further includes a power source assembly 426 configured to perform power management over the communication apparatus 400, a wired or wireless network interface 450 configured to couple the communication apparatus 400 to a network, and an Input/Output (I/O) interface 458. The communication apparatus 400 may operate an operating system stored in the memory 932, e.g., Windows Server TM, Mac OS XTM, Unix TM, Linux TM, Free BSDTM, or the like.

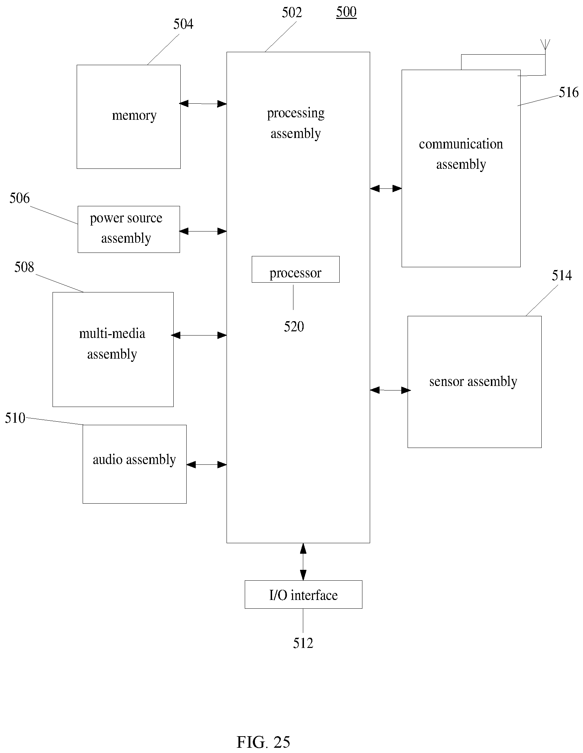

FIG. 25 is a block diagram of a communication apparatus 500 based on M-TRPs according to embodiments of the present disclosure. For example, the communication apparatus 500 may be a mobile phone, a computer, a digital broadcasting terminal, a message transceiver device, a game console, a flat-panel device, medical equipment, fitness equipment, a personal digital assistant, or a RedCap terminal.

As shown in FIG. 25, the communication apparatus 500 includes at least one assembly selected from the group consisting of a processing assembly 502, a memory 504, a power source assembly 506, a multi-media assembly 508, an audio assembly 510, an Input/Output (I/O) interface 512, a sensor assembly 514, and a communication assembly 516.

Generally, the processing assembly 502 controls an entire operation of the communication apparatus 500, e.g., operations associated with display, phone call, data communication, camera operation and recording operation. The processing assembly 502 includes at least one processor 520 to execute instructions, so as to implement all of, or a part of, the steps of the above-mentioned method. In addition, the processing assembly 502 includes at least one module for the interaction between the processing assembly 502 and the other assembly. For example, the processing assembly 502 includes a multi-media module for the interaction between the multi-media assembly 505 and the processing assembly 502.

The memory 504 is configured to store therein various types of data to support the operation of the communication apparatus 500. Examples of such data include instructions for any application or method operated on the communication apparatus 500, contact data, phonebook data, messages, pictures, video, etc. The memory 504 may be implemented in the form of any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic disk, or an optical disk.

The power source assembly 506 provides power to various assemblies of the communication apparatus 500. The power source assembly 506 may include a power management system, one or more power sources, and any other assemblies associated with the generation, management and distribution of power in the communication apparatus 500.

The multi-media assembly 508 includes a screen for providing an output interface between the communication apparatus 500 and a user. In some embodiments of the present disclosure, the screen may include a Liquid Crystal Display (LCD) and a Touch Panel (TP). When the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of time and a pressure associated with the touch or swipe action. In some embodiments of the present disclosure, the multi-media assembly 508 includes a front-facing camera and/or a rear-facing camera. When the communication apparatus 500 is in an operating mode, such as a shooting mode or a video mode, the front-facing camera and/or the rear-facing camera may receive external multi-media data. Each of the front-facing camera and the rear-facing camera may be a fixed optical lens system or has focal length and optical zoom capability.

The audio assembly 510 is configured to output and/or input audio signals. For example, the audio assembly 510 includes a microphone (MIC) configured to receive an external audio signal when the communication apparatus 500 is in an operating mode, such as a call mode, a recording mode, and a voice recognition mode. The received audio signal may be further stored in the memory 504 or transmitted via the communication assembly 516. In some embodiments of the present disclosure, the audio assembly 510 further includes a speaker to output audio signals.

The I/O interface 512 provides an interface between the processing assembly 502 and peripheral interface modules, such as a keyboard, a click wheel, buttons, and the like. The buttons may include, but not limited to, a home button, a volume button, a starting button, and a locking button.

The sensor assembly 514 includes one or more sensors to provide status assessments about various aspects of the communication apparatus 500. For example, the sensor assembly 514 may detect an on/off status of the communication apparatus 500, relative positioning of assemblies, e.g., the display and the keypad, of the communication apparatus 500, a change in a position of the communication apparatus 500 or an assembly of the communication apparatus 500, a presence or absence of user contact with the communication apparatus 500, an orientation or an acceleration/deceleration of the communication apparatus 500, and a change in a temperature of the communication apparatus 500. The sensor assembly 514 may include a proximity sensor configured to detect the presence of nearby objects without any physical contact. The sensor assembly 514 may also include a light sensor, such as a Complementary Metal Oxide Semiconductor (CMOS) or Charge-Coupled Device (CCD) image sensor, for use in imaging applications. In some embodiments of the present disclosure, the sensor assembly 514 may also include an accelerometer sensor, a gyroscope sensor, a magnetic sensor, a pressure sensor, or a temperature sensor.

The communication assembly 516 is configured to facilitate wired or wireless communication between the communication apparatus 500 and other devices. The communication apparatus 500 may access a wireless network based on a communication standard, such as Wi-Fi, 2G or 3G, or a combination thereof. In an exemplary embodiment of the present disclosure, the communication assembly 516 receives a broadcast signal or broadcast associated information from an external broadcast management system via a broadcast channel. In an exemplary embodiment of the present disclosure, the communication assembly 516 further includes a Near Field Communication (NFC) module to facilitate short-range communication. For example, the NFC module may be implemented based on an RF Identification (RFID) technology, an Infrared Data Association (IrDA) technology, an Ultra-Wide Band (UWB) technology, a Blue Tooth (BT) technology, and other technologies.

In an exemplary embodiment of the present disclosure, the communication apparatus 500 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above-mentioned method.

The present disclosure further provides in some embodiments a non-transitory computer-readable storage medium including instructions, e.g., the memory 504 including the instructions. The instructions are executed by the processor 520 of the communication apparatus 500 to generate the above-mentioned method. For example, the non-temporary computer-readable storage medium may be an ROM, Random Access Memory (RAM), a CD-ROM, a magnetic tape, a floppy disk, an optical data storage device, etc.

In the embodiments of the present disclosure, the corresponding TA information is determined for different TRPs, so as to enable an uplink time and a downlink time for different TRPs to be closer to each other, thereby to relieve an ISI, and improve system communication performance.

It should be appreciated that, the expression "a plurality of" in the embodiments of the present disclosure refers to two or more, and the other quantifiers are similar. The expression "and/or" in the embodiments of the present disclosure is used to describe the relationship between objects, and it may include three relationships. For example, "A and/or B" represents that, there is only A, there are both A and B, and there is only B. The symbol "/" usually refers to "or". Such a singular form as "one" or "the" used in the embodiments of the present disclosure and the appended claims also intends to include a plural form, unless otherwise defined.

It should be further appreciated that, such expressions as "first" and "second" are used to describe various information, but the information is not limited by these expressions. These expressions are merely used to differentiate the information of the same type from each other rather than to represent any specific order or importance level. Actually, the expressions "first" and "second" may be replaced with each other. For example, without departing from the scope of the present disclosure, first information may also be called as second information, and similarly second information may also be called as first information.

It should be appreciated that, although the operation are described in a specific order in the drawings, it shall not be construed as that these operations are required to be performed in the shown specific order or in a serial order, or all the operations are required to be performed to obtain a desired result. In a specific environment, multitasking and parallel processing may be possibly advantageous.

Other embodiments of the present disclosure will be apparent to those skilled in the art from consideration of the specification and practice of the present disclosure disclosed here. This application is intended to cover any variations, uses, or adaptations of the disclosure following the general principles thereof and including such departures from the disclosure as come within known or customary practice in the art.

It should be appreciated that, the present disclosure is not limited to the exact construction that has been described hereinabove and illustrated in the accompanying drawings, and that various modifications and changes can be made without departing from the scope thereof. It is intended that the scope of the present disclosure only be limited by the appended claims.

## Claims

1. A communication method based on Multiple Transmission Reception Points (M-TRPs), performed by a network device, comprising:

   determining indication information, wherein the indication information is used to indicate Timing Advance (TA) information about at least two Transmission Reception Points (TRPs); and
   sending the indication information to a User Equipment (UE).

2. The communication method of claim 1, wherein the indication information is used to indicate at least two TA information, and the at least two TA information correspond to the at least two TRPs respectively.

3. The communication method of claim 2, wherein the indication information comprises first indication information and second indication information,
   wherein the first indication information is used to indicate initial TA information, and the second indication information is used to indicate updated TA information.

4. The communication method of claim 3, wherein the first indication information is used to indicate single initial TA information, and the second indication information is used to indicate at least two updated TA information,
   wherein the at least two updated TA information correspond to the at least two TRPs respectively.

5. The communication method of claim 3, wherein the first indication information is used to indicate at least two initial TA information, and the second indication information is used to indicate at least two updated TA information;

the at least two initial TA information correspond to the at least two TRPs respectively; and
the at least two updated TA information correspond to the at least two TRPs respectively.

6.  The communication method of claim 5, wherein the first indication information comprises at least two first Timing Advance Command (TAC) indication fields, and the at least two first TAC indication fields correspond to the at least two initial TA information respectively.

7.  The communication method of claim 5 or 6, wherein the second indication information comprises a single second TAC indication field, and the single second TAC indication field is used to indicate the at least two updated TA information.

8.  The communication method of claim 5 or 6, wherein the second indication information comprises at least two second TAC indication fields, and the at least two second TAC indication fields correspond to the at least two updated TA information respectively.

9.  The communication method of claim 5 or 6, wherein the second indication information comprises a second TAC indication field and a TA offset indication field;

    the second TAC indication field is used to indicate the TA information; and
    the TA offset indication field is used to indicate offset information about a TA.

10. The communication method of claim 9, wherein the offset information about the TA comprises: relative offset information or absolute offset information;

    the relative offset information is an offset relative to the TA information indicated in the second TAC indication field; and
    the absolute offset information is determined based on a quantization gradient, and the quantization gradient is determined based on the TA information indicated in the second TAC indication field.

11. The communication method of claim 1, wherein the indication information is used to indicate single TA information.

12. The communication method of claim 11, wherein the single TA information comprises one of:

    TA information about a TRP selected from the at least two TRPs based on a predetermined rule;
    TA information having a largest value in the at least two TA information about the at least two TRPs;
    TA information having a smallest value in the at least two TA information about the at least two TRPs; or
    TA information obtained by subjecting values corresponding to the at least two TA information about the at least two TRPs to a mean processing.

13. The communication method of any of claims 1 to 12, wherein the TA information comprises at least one of a TA or a timing reference time.

14. The communication method of claim 3, wherein the first indication information is a random access response, and the second indication information is a Medium Access Control Control Element (MAC-CE).

15. A communication method based on M-TRPs, performed by a UE, comprising:

    determining indication information, wherein the indication information is used to indicate TA information about at least two TRPs;
    receiving the indication information; and
    sending uplink data to the at least two TRPs based on the indication information.

16. The communication method of claim 15, wherein the indication information is used to indicate at least two TA information, and the at least two TA information correspond to the at least two TRPs respectively.

17. The communication method of claim 16, wherein the indication information comprises first indication information and second indication information,
    wherein the first indication information is used to indicate initial TA information, and the second indication information is used to indicate updated TA information.

18. The communication method of claim 17, wherein the first indication information is used to indicate single initial TA information, and the second indication information is used to indicate at least two updated TA information; and the at least two updated TA information correspond to the at least two TRPs respectively.

19. The communication method of claim 17, wherein the first indication information is used to indicate at least two initial TA information, and the second indication information is used to indicate at least two updated TA information;

   the at least two initial TA information correspond to the at least two TRPs respectively; and
   the at least two updated TA information correspond to the at least two TRPs respectively.

20. The communication method of claim 19, wherein the first indication information comprises at least two first TAC indication fields, and the at least two first TAC indication fields correspond to the at least two initial TA information respectively.

21. The communication method of claim 19 or 20, wherein the second indication information comprises a single second TAC indication field, and the single second TAC indication field is used to indicate the at least two updated TA information.

22. The communication method of claim 19 or 20, wherein the second indication information comprises at least two second TAC indication fields, and the at least two second TAC indication fields correspond to the at least two updated TA information respectively.

23. The communication method of claim 19 or 20, wherein the second indication information comprises a second TAC indication field and a TA offset indication field;

   the second TAC indication field is used to indicate the TA information; and
   the TA offset indication field is used to indicate offset information about a TA.

24. The communication method of claim 23, wherein the offset information about the TA comprises:

   relative offset information or absolute offset information;
   the relative offset information is an offset relative to the TA information indicated in the second TAC indication field; and
   the absolute offset information is determined based on a quantization gradient, and the quantization gradient is determined based on the TA information indicated in the second TAC indication field.

25. The communication method of claim 15, wherein the indication information is used to indicate single TA information.

26. The communication method of claim 25, wherein the single TA information comprises one of:

   TA information about a TRP selected from the at least two TRPs based on a predetermined rule;
   TA information having a largest value in the at least two TA information about the at least two TRPs;
   TA information having a smallest value in the at least two TA information about the at least two TRPs; or
   TA information obtained by subjecting values corresponding to the at least two TA information about the at least two TRPs to a mean processing.

27. The communication method of any of claims 15 to 26, wherein the TA information comprises at least one of a TA or a timing reference time.

28. The communication method of claim 17, wherein the first indication information is a random access response, and the second indication information is a MAC-CE.

29. A communication apparatus based on M-TRPs, the communication apparatus being a network device and comprising:

   a determination module configured to determine indication information, wherein the indication information is used to indicate TA information about at least two TRPs; and
   a sending module configured to send the indication information to a UE.

30. A communication apparatus based on M-TRPs, the communication apparatus being a UE and comprising:

a determination module configured to determine indication information, wherein the indication information is used to indicate TA information about at least two TRPs;
a reception module configured to receive the indication information; and
a sending module configured to send uplink data to the at least two TRPs based on the indication information.

31. A random access device, comprising:

a processor; and
a memory storing therein instructions executable by the processor,
wherein the processor is configured to implement the communication method of any of claims 1 to 14.

32. A random access device, comprising:

a processor; and
a memory storing therein instructions executable by the processor,
wherein the processor is configured to implement the communication method of any of claims 15 to 28.

33. A non-transitory computer-readable storage medium storing therein instructions, wherein, when the instructions are executed by a processor of a network device, the communication method of any of claims 1 to 14 is implemented.

34. A non-transitory computer-readable storage medium storing therein instructions, wherein, when the instructions are executed by a processor of a mobile terminal, the communication method of any of claims 15 to 28 is implemented.

FIG. 1

time when a
downlink signal is
sent by a TRP

time when the
downlink signal
arrives at a UE

time when an uplink
signal is sent by the
UE

time when the uplink
signal arrives at the
TRP

time misalignment

FIG. 2

1 TA (based on TRP1)
2 TA reference times (TRP-specific)

FIG. 3

2 TAs (TRP-specific)
1 TA reference time (based on TRP1)

FIG. 4

2 TAs (TRP-specific)
2 TA reference times (TRP-specific)

T5 T4                    T1              T2 T3

time when a
downlink signal is
sent by a TRP

DL TRP 1

DL TRP 2

time when the
downlink signal
arrives at a UE

← - - TA1 - - →    DL TRP 1

← - - - TA2 - - - →    DL TRP 2

time when an uplink
signal is sent by the
UE

UL TRP 1

UL TRP 2

time when the uplink
signal arrives at the
TRP

UL TRP 1

UL TRP 2

FIG. 5

| R | TAC | | Byte 1 |
|---|---|---|---|
| TAC | | UL grant | Byte 2 |

FIG. 6

| TAG ID | TAC | Byte 1 |
|---|---|---|

FIG. 7

determining indication information, the indication information being used to indicate TA information about at least two TRPs — S11

sending the indication information to a UE — S12

FIG. 8

configuring indication information for a UE, the indication information being used to indicate at least two TA information, the at least two TA information corresponding to at least two TRPs respectively — S21

FIG. 9

configuring indication information for a UE, the indication information including first indication information for indicating single initial TA information and second indication information for indicating at least two updated TA information — S31

FIG. 10

configuring indication information for a UE, the indication information including first indication information for indicating at least two initial TA information and second indication information for indicating at least two updated TA information — S41

FIG. 11

| R | R | R | R | R | TAC | Byte 1 |
|---|---|---|---|---|-----|--------|
| TAC | | | | | | Byte 2 |
| TAC | | | | | | Byte 3 |
| TAC | | | | UL grant | | Byte 4 |

FIG. 12

| | | | | | | | | | |
|---|---|---|---|---|---|---|---|---|---|

| TAC | Byte 1 |
| TAC | Byte 2 |
| TAC | Byte 3 |
| R | R | R | R | R | UL grant | Byte 4 |

FIG. 13

| | | | | | | | | | |
|---|---|---|---|---|---|---|---|---|---|

| TAG ID | TAC | Byte 1 |
| TAC | R | R | Byte 2 |

FIG. 14

| | | | | | | | | | |
|---|---|---|---|---|---|---|---|---|---|

| TAG ID | TAC | Byte 1 |
| TAG ID | TAC | Byte 2 |

FIG. 15

| | | | | | | | | | |
|---|---|---|---|---|---|---|---|---|---|

| TAG ID | TAC | Byte 1 |
| TAOC | R | Byte 2 |

FIG. 16

| TAG ID | TAC | Byte 1 |
| TAG ID | TAOC | Byte 2 |
| TA OC | R | R | R | R | R | R | R | Byte 3 |

FIG. 17

| TAG ID | TAC | Byte 1 |
| TAOC | R | R | Byte 2 |

FIG. 18

| TAG ID | TAC | Byte 1 |
| TAG ID | TAOC | Byte 2 |

FIG. 19

S51

configuring indication information for a UE, the indication information being used to indicate single TA information

FIG. 20

determining indication information, the indication information being used to indicate TA information about at least two TRPs ⌐ S61

receiving the indication information ⌐ S62

sending uplink data to the at least two TRPs based on the indication information ⌐ S63

FIG. 21

200

determination module ⌐ 201

sending module ⌐ 202

FIG. 22

300

```
┌──────────────────┐        ┌──────────────────┐
│                  │        │   determination  │── 301
│ reception module │────────│      module      │
│                  │        │                  │
└──────────────────┘        └──────────────────┘
         │                           │
        302                          │
                            ┌──────────────────┐
                            │                  │── 303
                            │  sending module  │
                            │                  │
                            └──────────────────┘
```

FIG. 23

400

```
┌─────────────────────────────────────────────────────────┐
│                                                          │
│   422 ┌──────────────┐   ┌──────────────┐  426           │
│       │  processing  │   │    power     │                │
│       │   assembly   │   │    source    │                │
│       │              │   │   assembly   │                │
│       └──────────────┘   └──────────────┘                │
│              │                  │                         │
│   432 ┌──────────────┐   ┌──────────────┐      450        │
│       │              │   │   network    │─────────────►   │
│       │    memory    │   │  interface   │ ◄────────────   │
│       │              │   │              │                 │
│       └──────────────┘   └──────────────┘                 │
│                                                           │
│                          ┌──────────────┐      458        │
│                          │     I/O      │─────────────►   │
│                          │  interface   │ ◄────────────   │
│                          │              │                 │
│                          └──────────────┘                 │
└─────────────────────────────────────────────────────────┘
```

FIG. 24

504

502    500

memory

processing
assembly

communication
assembly

516

506

power source
assembly

508

processor

520

514

multi-media
assembly

sensor assembly

510

audio assembly

I/O interface

512

FIG. 25

## INTERNATIONAL SEARCH REPORT

| International application No. |
| --- |
| **PCT/CN2022/090682** |

**A. CLASSIFICATION OF SUBJECT MATTER**

H04W 72/04(2009.01)i;  H04W 56/00(2009.01)i

According to International Patent Classification (IPC) or to both national classification and IPC

**B. FIELDS SEARCHED**

Minimum documentation searched (classification system followed by classification symbols)

H04W; H04B

Documentation searched other than minimum documentation to the extent that such documents are included in the fields searched

Electronic data base consulted during the international search (name of data base and, where practicable, search terms used)

CNABS; CNTXT; ENTXT; WOTXT; USTXT; 3GPP: 多TRP, 多发射点, 定时提前, 多, 面板, 第一, 第二, 对应, 映射, M-TRP, timimg advance, TA, multi, panel, first, second, map

**C. DOCUMENTS CONSIDERED TO BE RELEVANT**

| Category* | Citation of document, with indication, where appropriate, of the relevant passages | Relevant to claim No. |
| --- | --- | --- |
| X | CN 108282213 A (ASUSTEK COMPUTER INC.) 13 July 2018 (2018-07-13) paragraphs [0037]-[0126] | 1-34 |
| X | US 2021321355 A1 (NEC CORP.) 14 October 2021 (2021-10-14) paragraphs [0043]-[0111] | 1-34 |
| A | US 2021185670 A1 (QUALCOMM INC.) 17 June 2021 (2021-06-17) entire document | 1-34 |
| A | CN 113647046 A (NOKIA TECHNOLOGIES OY) 12 November 2021 (2021-11-12) entire document | 1-34 |
| A | CN 110637495 A (LG ELECTRONICS INC.) 31 December 2019 (2019-12-31) entire document | 1-34 |
| A | SAMSUNG. ""Enhancements on Multi-TRP Inter-Cell Operation"" *3GPP TSG RAN WG1 #102 R1-2006130 e-Meeting*, 07 August 2020 (2020-08-07), entire document | 1-34 |

☐ Further documents are listed in the continuation of Box C.   ☑ See patent family annex.

| * Special categories of cited documents: | "T" | later document published after the international filing date or priority date and not in conflict with the application but cited to understand the principle or theory underlying the invention |
| --- | --- | --- |
| "A" document defining the general state of the art which is not considered to be of particular relevance | | |
| "E" earlier application or patent but published on or after the international filing date | "X" | document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" document referring to an oral disclosure, use, exhibition or other means | | |
| "P" document published prior to the international filing date but later than the priority date claimed | "&" | document member of the same patent family |

| Date of the actual completion of the international search | Date of mailing of the international search report |
| --- | --- |
| **21 December 2022** | **20 January 2023** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/090682**

| Patent document cited in search report | | | Publication date (day/month/year) | Patent family member(s) | | | Publication date (day/month/year) |
|---|---|---|---|---|---|---|---|
| CN | 108282213 | A | 13 July 2018 | US | 2018199360 | A1 | 12 July 2018 |
| | | | | US | 2022124759 | A1 | 21 April 2022 |
| | | | | CN | 108282213 | B | 21 September 2021 |
| | | | | US | 11246149 | B2 | 08 February 2022 |
| US | 2021321355 | A1 | 14 October 2021 | JP | 2022502879 | A | 11 January 2022 |
| | | | | WO | 2020024295 | A1 | 06 February 2020 |
| US | 2021185670 | A1 | 17 June 2021 | WO | 2021119303 | A1 | 17 June 2021 |
| | | | | EP | 4074110 | A1 | 19 October 2022 |
| | | | | CN | 114762400 | A | 15 July 2022 |
| | | | | IN | 202227027077 | A | 26 August 2022 |
| CN | 113647046 | A | 12 November 2021 | EP | 3949219 | A1 | 09 February 2022 |
| | | | | US | 2022182957 | A1 | 09 June 2022 |
| | | | | WO | 2020194103 | A1 | 01 October 2020 |
| | | | | BR | 112021019393 | A2 | 07 December 2021 |
| CN | 110637495 | A | 31 December 2019 | EP | 3614766 | A1 | 26 February 2020 |
| | | | | US | 2020162289 | A1 | 21 May 2020 |
| | | | | WO | 2018203680 | A1 | 08 November 2018 |
| | | | | EP | 3614766 | A4 | 23 December 2020 |
| | | | | US | 11159347 | B2 | 26 October 2021 |

Form PCT/ISA/210 (patent family annex) (January 2015)